# EUROPEAN PATENT SPECIFICATION

(11) **EP 0 447 172 B1**
(45) Date of publication and mention of the grant of the patent: **29.05.1996**
(21) Application number: 91302040.0
(22) Date of filing: 12.03.1991
(51) Int. Cl.: H01L 41/09

(54) **Ultrasonic motor**
Ultraschallmotor
Moteur à ultrasons

(30) Priority: 12.03.1990 JP 60292/90; 13.03.1990 JP 61671/90; 20.03.1990 JP 70324/90; 27.03.1990 JP 31685/90 U; 18.04.1990 JP 102573/90; 09.07.1990 JP 181219/90; 17.01.1991 JP 3921/91; 17.01.1991 JP 3922/91; 17.01.1991 JP 3923/91
(43) Date of publication of application: 18.09.1991
(73) Proprietor: SEIKO EPSON CORPORATION, Shinjuku-ku Tokyo (JP)
(72) Inventor: Ueda, Tomoo, c/o Seiko Epson Corporation, Suwa-shi, Nagano-ken (JP); Miyahara, Osamu, c/o Seiko Epson Corporation, Suwa-shi, Nagano-ken (JP); Kitahara, Joji, c/o Seiko Epson Corporation, Suwa-shi, Nagano-ken (JP); Furukawa, Tsuneaki, c/o Seiko Epson Corporation, Suwa-shi, Nagano-ken (JP)
(74) Representative: Miller, Joseph

(56) References cited:
- IEEE 1987 ULTRASONICS SYMPOSIUM, PROCEEDINGS vol. 2, OCT. 14-16, 1987, DENVER, COLORADO, US, pages 747-756, R. INABA et al.: "PIEZOELETRIC ULTRASONIC MOTOR"

## Description

The present invention relates to ultrasonic motors which convert the vibration energy of a piezo-electric element into rotational movement and more particularly to ultrasonic motors suited to stepping operation for use in clocks and watches.

Ultrasonic motors of the prior art generated a progressive wave or a standing wave on an annular-shaped or disc-shaped vibrator (stator) by impressing a drive voltage on a piezo-electric ring and using frictional force to rotate the annular-shaped moving member (rotor) in contact with teeth formed on the vibrator. Such ultrasonic motors are disclosed in Japanese Laid Open Patent No. 58-148682 (GB Patent No. 2,120,462).

In this case, the piezo-electric ring was provided with a plurality of subelements, in which the direction of polarization (poling) of alternate elements was opposite from top to bottom on the ring. By shifting the phase of these subelements at two locations on the ring, two piezo-electric subelement rows were formed. When an AC voltage was impressed on the top and bottom of these piezo-electric subelement rows, the sub-element rows polarized in the opposite direction and were alternately expanded and contracted repeatedly in the circumferential direction of the piezo-electric ring, thus causing an overall deformation in the shape of a wave. A progressive wave was thus generated on the surface of the vibrator which was fixed to the piezo-electric ring. This progressive wave sequentially changed the height of the teeth formed on the vibrator, and the frictional force between the teeth and the moving member in contact with the teeth caused the moving member to rotate in the prescribed direction.

However, the ultrasonic motor described above had the following problems. That is, when precise positioning control of the moving member was performed such as in a stepping operation and resting at prescribed rotational positions, it was necessary to attach an encoder or other type of feedback position sensor and perform feedback control. Attachment of this position sensor made it difficult to make the mechanical part of the configuration compact and the control system consumed a fair amount of power. Consequently, the device was particularly unsuited as an ultrasonic motor for clocks and watches requiring a compact, low-power arrangement.

The present invention is intended to solve the above problems, and its purpose is to offer a compact, low-power ultrasonic motor capable of stepping operation.

According to the present invention, there is provided an ultrasonic motor comprising a vibrator which is vibrated by a piezo-electric element ring having a plurality of angularly spaced apart piezo-electric sub-elements; a rotatable member which is in contact with the vibrator and which is arranged to be rotated by the latter; and drive means for impressing voltages on the sub-elements so as to produce vibration of the vibrator which causes rotation of the rotatable member, characterised in that the rotatable member has angularly spaced apart non-contact regions which are out of contact with the vibrator and which are spaced from each other by half the wavelength of the said vibration.

Preferably, the non-contact regions are constituted by notches or indentations.

The sub-elements may be alternately polarized in opposite directions.

The piezo-electric sub-elements are preferably arranged in first and second groups which are respectively connected to first and second electrodes or groups thereof.

The first and second electrodes or groups thereof may be disposed on one side of the piezo-electric element ring, there being a common electrode disposed on the opposite side of the piezo-electric element ring, the drive means comprising first and second output means for outputting drive signals to the first and second electrodes or groups thereof respectively and third output means for outputting drive signals to the common electrode, each of the output means being settable to a high impedance output condition in addition to a drive signal output condition.

The vibrator preferably has a plurality of contact regions which contact the rotatable member and are at a different level from the remainder of the vibrator, the contact regions being symmetrically arranged angularly of the vibrator and being spaced from each other by one part of 2n parts of the said wavelength of the vibration, where n is a whole number of at least 3.

In one embodiment, the ultrasonic motor of the present invention comprises a piezo-electric element on one side of a vibrator which is vibrated by the piezo-electric element, a rotatable member which is in contact with the vibrator and is rotated by frictional force, a piezo-electric ring provided on the piezo-electric element and on which piezo-electric sub-elements polarized in opposite direction from top to bottom are alternately positioned, a first piezo-electric sub-element group and a second piezo-electric sub-element group formed around the piezo-electric ring so that they may be vibrated at a wavelength that is one integral part of the circumference and which are spaced to produce a mutual phase difference, and a drive means capable of impressing AC voltages on the first piezo-electric sub-element group and the second piezo-electric sub-element group, wherein non-contact areas made up of notches or indentations and corresponding to the vibrator are formed on the rotatable member on the surface facing the vibrator and at intervals that are half the prescribed wavelength of vibration of the first piezo-electric sub-element group and the second piezo-electric sub-element group.

In this embodiment, a plurality of surface level differences having rotational symmetry are formed on the vibrator on the circumference opposite the non-contact areas on the surface facing the rotatable member with a spacing that is one part of 2n parts (n being a whole number that is 3 or greater) of the prescribed wavelength of vibration of the first piezo-electric sub-element group and the second piezo-electric sub-element group.

In this case, the first piezo-electric sub-element group and the second piezo-electric sub-element group may be positioned along the piezo-electric ring with a spatial difference that is one-fourth the prescribed phase, or the first piezo-electric sub-element row and the second piezo-electric sub-element row may be positioned along the piezo-electric ring with a spatial phase difference that is one-sixth the prescribed phase.

The first piezo-electric sub-element group and the second piezo-electric sub-element group are preferably formed so that the positioning and the direction of polarization of their respective piezo-electric sub-elements are linearly symmetrical to each other on the surface of the piezo-electric ring.

Further, the piezo-electric element may be provided with a first electrode with conductive contact on one side of the first piezo-electric sub-element group, a second electrode with conductive contact on one side of the second piezo-electric sub-element row and a common electrode with conductive contact on the opposite sides of the first and second piezo-electric sub-element groups, the drive means being provided with a first output switch for outputting drive signals to the first electrode, a second output switch for outputting drive signals to the second electrode and a third output switch for outputting drive signals to the common electrode; and the output switches being settable to a high impedance output condition in addition to the drive signal output condition.

In one arrangement, the drive means intermittently rotates the rotatable member by repeating a first drive condition in which AC voltages with a prescribed mutual phase difference are impressed between the first electrode and the common electrode and between the second electrode and the common electrode to induce a progressive wave on the piezo-electric ring and a second or third drive condition in which an AC voltage is impressed between the first electcrode or the second electrode and the common electrode to induce a standing wave on the piezo-electric ring. In this case, the first drive condition, the second drive condition and a stop condition in which an AC voltage is not impressed between the first electrode or the second electrode and the common electrode may be sequentially repeated.

In another arrangement, a first drive condition in which an AC voltage is impressed between the first electrode and the common electrode to induce a first standing wave on the piezo-electric ring, a second drive condition in which an AC voltage is impressed between the second electrode and the common electrode to induce a second standing wave on the piezo-electric ring with the prescribed phase difference, and a third drive condition in which an AC voltage is impressed between the first electrode and the common electrode and between the second electrode and the common electrode to induce a composite standing wave on the piezo-electric ring are repeated in any sequence to rotate the rotatable member.

In yet another arrangement a first drive condition in which an AC voltage is impressed between the first electrode and the common electrode to induce a first standing wave on the piezo-electric ring, a second drive condition in which an AC voltage is impressed between the second electrode and the common electrode to induce a second standing wave on the piezo-electric ring, a third drive condition in which an AC voltage is impressed between the first electrode and the common electrode and between the second electrode and the common electrode to induce a third standing wave on the piezo-electric ring, and a fourth drive condition in which an AC voltage is impressed between the first electrode and the second electrode with the output switch connected to the common electrode in a cut-off condition (high output impedance condition) to induce a fourth standing wave on the piezo-electric ring are repeated in any sequence.

By such means, when an AC voltage is impressed on the first piezo-electric sub-element group of the piezo-electric element by the drive means, each of the sub-elements alternately expands and contracts, and a wave with the same wavelength as the prescribed wavelength formed by the piezo-electric sub-elements is generated on the vibrator around the piezo-electric ring.

Thus, the first piezo-electric sub-element may be formed to vibrate at a wavelength that is one integral part of the circumference of the piezo-electric ring, and so when an AC voltage is impressed, the piezo-electric ring is deformed into the shape of a standing wave, and the wave formed on the vibrator becomes the first standing wave.

Similarly, when an AC voltage is impressed on the second piezo-electric sub-element group, a second standing wave is formed on the piezo-electric ring along the prescribed wavelength of the second piezo-electric sub-element group.

Since the first piezo-electric sub-element group and the second piezo-electric sub-element group are positioned so that their wavelengths have a phase difference, the second standing wave is shifted from the first standing wave by that phase difference.

Further, by impressing an AC voltage on both the first piezo-electric sub-element group and the second piezo-electric sub-element group, a composite standing wave of the first standing wave and the second standing wave can be formed on the piezo-electric ring. Since this composite standing wave is formed from the first standing wave and the second standing wave which are generated with a spatial phase difference between them, it becomes a standing wave with a phase different from the phases of both the first and second standing waves, and when an AC voltage is impressed with a phase mutually different from the first piezo-electric sub-element group and the second piezo-electric sub-element group, then the composite standing wave becomes a progressive wave.

The standing waves generated on the vibrator come in contact with the surface level differences of the non-contact areas of the rotatable member and exert a stress from the antinodes of the standing wave toward the nodes, and the location where this stress becomes balanced determines the resting position of the rotatable member. That is the level differences in the non-contact areas of the rotatable member receive stress from the antinodes toward the nodes of the standing waves by the contact of the surface level differences in the vibrator due to the standing wave with the boundary of the non-contact areas of the rotatable member, and they are aligned with on the nodes of the standing waves which is where the stress becomes balanced before or after in the direction of rotation.

The progressive wave generated in the vibrator exerts a flow stress on the contact areas of the moving member, and the couple generated by this rotates the rotatable member in the reverse direction of progression.

In the case in which multiple level differences are formed on the vibrator, the surface level differences formed when a standing wave is generated on the vibrator vibrate up and down along the standing wave, but since these surface level differences are formed with rotational symmetry in a period that is one part of n parts (where n is a whole number that is 3 or greater) of half of the above prescribed wavelength, the same balanced stress condition can be maintained on the standing wave when the rotatable member is stepped with the period of the surface level differences, thus making it possible to precisely and continually maintain a constant angle of rotation.

When the first piezo-electric sub-element group and the second piezo-electric sub-element group are formed on the surface of the piezo-electric sub-element ring so that they are linearly symmetrical to each other, the vibration states of the first standing wave and the second standing wave, i.e. the amplitude of the wave and the time required until the wave stabilizes, can be made equal.

A progressive wave may be formed on the piezo-electric ring by impressing an AC voltage having a phase difference with both the first piezo-electric sub-element group and the second piezo-electric sub-element group formed with a mutual phase difference. When a progressive wave is also formed on the vibrator as a result, the contact portions of the rotatable member are stressed by this progressive wave and the rotatable member rotates in the reverse direction.

After the rotatable member is rotated for the prescribed time period by this progressive wave, the first standing wave or the second standing wave is generated on the vibrator, and by "resting" the rotatable member on the nodes, stepped operation of the rotatable member becomes possible.

When the rotatable member is intermittently driven at the prescribed stepping angle, power consumption during drive can be reduced by adding a stop period during which the drive signal is not impressed after the rotation period and the rest period.

When the first standing wave, the second standing wave and the composite standing wave are formed by mutually shifting the first piezo-electric sub-element group and the second piezo-electric sub-element group one-sixth of a wavelength, the position of the nodes of the standing wave can be successively moved one-sixth of a wavelength by sequentially forming these waves on the vibrator, and since the non-contact areas of the rotatable member also move the prescribed angle and then rest, stepping operation of the rotatable member becomes possible.

As indicated above, the drive means of the ultrasonic motor may be provided with a first output switch, a second output switch and a third output switch which supply drive signals between the first electcrode and second electrode of the piezo-electric element and their common electrode. Assuming a case in which these output switches can be set to a cut-off condition (high output impedance condition), the first standing wave can be generated on the piezo-electric ring by impressing AC voltages from the first output switch and the third output switch between the first electrode and the common electrode, the second standing wave can be generated by impressing AC voltages from the second output switch and the third output switch between the second electrode and the common electrode, the third standing wave can be generated by impressing AC voltages from the first output switch, the second output switch and the third output switch between the first electrode, the second electrode and their common electrode, and the fourth standing wave can be generated by impressing AC voltages from the first output switch and the second output switch between the first electrode and the second electrode and setting the third output switch to a high impedance condition. Applying AC voltage between the first arid second electrodes and arranging the common electrodes to be in open condition, this fourth standing wave becomes the same condition when AC voltage is applied between the first piezo-electric sub-element group and the common electrode and also between the second piezo-electric sub-element group and the common electrode, these AC voltages being shifted 180° from each other.

That is, where the first standing wave is A, the second standing wave is B and the standing wave that is a composite of the first standing wave and the second standing wave, which have the same phase, is A+B, then the fourth standing wave is A+o(B,sUP12(_)) or$\frac{\text{A+o(B,sUP12(_))}}{\text{A+B}}$ As a result, when the wavelengths of the first piezo-electric sub-element group and the second piezo-electric sub-element group are formed so that they are shifted one-fourth of a wavelength, the respective four standing waves are generated on the piezo-electric ring so that they are shifted one-eighth of a wavelength, and therefore the rotatable member can be successively rotated by these four standing waves.

The invention is illustrated, merely by way of example, in the accompanying drawings, in which:-
Figure 1 is an exploded view of the main mechanical structural components of a first embodiment of an ultrasonic motor according to the present invention;
Figure 2 is a cross-section of the mechanical structure of the said first embodiment;
Figures 3(a) and 3(b) are a top view and a side view respectively showing the structure of a rotor of the said first embodiment;
Figures 4(a) and 4(b) are a top view and cross-section respectively showing the structure of a stator of the said first embodiment;
Figures 5(a), 5(b) and 5(c) are a top view, bottom view and side view respectively showing the structure of a piezo-electric element of the said first embodiment;
Figures 6(a) and 6(b) are a top view and bottom view respectively showing the structure of a piezo-electric element which may be used in the said first embodiment and which is provided with two pilot electrodes;
Figure 7 is a working diagram showing the positional relationship of notches in the rotor of the said first embodiment and the standing waves;
Figure 8 is a schematic diagram showing the drive circuit of the said first embodiment;
Figures 9(a), 9(b) and 9(c) are timing charts showing the operation of the drive circuit of the said first embodiment;
Figure 10 is a schematic diagram showing the drive circuit of a second embodiment of an ultrasonic motor according to the present invention;
Figures 11(a), 11(b) and 11(c) are timing charts showing the operation of the drive circuit of the said second embodiment;
Figures 12 (1) to (4) are conceptual diagrams showing the connection conditions in four stages in the drive employed in the said second embodiment;
Figures 13 (1) to (4) are waveform diagrams showing the standing waves generated during drive in the said second embodiment;
Figures 14(a) and 14(b) are a top view and a side view respectively showing the structure of a piezo-electric element of a third embodiment of an ultrasonic motor according to the present invention;
Figures 15 (1) to (3) are conceptual diagrams showing the connection conditions in each of the stages in a drive employed in the said third embodiment;
Figures 16 (1) to (3) are waveform diagrams showing the standing waves generated during drive in the said third embodiment;
Figure 17 is a graph showing the relationship between the thickness of the stator and the resonance frequency at each of the wavelengths of the standing waves formed on the stator of an ultrasonic motor according to the present invention;
Figure 18 is a schematic diagram of the drive circuit of a fourth embodiment of an ultrasonic motor according to the present invention;
Figures 19(a) to 10(c) are timing charts showing the operation of the drive circuit in the said fourth embodiment;
Figures 20 (1) to (3) are generalized diagrams showing the connection conditions in each of the stages in the drive employed of the said fourth embodiment;
Figures 21(1) to (3) are waveform charts showing the standing waves generated during drive in the said fourth embodiment;
Figure 22 is a generalized block diagram of a fifth embodiment of an ultrasonic motor according to the present invention;
Figure 23 is a top view of a fifth embodiment of an ultrasonic motor according to the present invention;
Figure 24 is a cross section of the said fifth embodiment;
Figures 25 and 26 are explanatory diagrams showing excitation of standing waves in the said fifth embodiment;
Figure 27 is an explanatory diagram illustrating a drive condition following that in Figure 26 in which standing waves are formed at positions perpendicular to those in Figure 25;
Figure 28 is a timing chart for the drive circuit in the block diagram in Figure 22;
Figure 29 shows the configuration of a vibrator which may be used in the said fifth embodiment;
Figure 30 shows the configuration of another vibrator which may be used in the said fifth embodiment;
Figure 31 is a cross-section of a sixth embodiment of an ultrasonic motor according to the present invention;
Figure 32 is a top view of the stator of the said sixth embodiment;
Figure 33 is a top view of a stator of a seventh embodiment of an ultrasonic motor according to the present invention;
Figure 34 is a bottom view of a piezo-electric ring which may be used in the said seventh embodiment;
Figure 35 is a top view of a stator of an eighth embodiment of an ultrasonic motor according to the present invention;
Figure 36 is a side view of a stator of a ninth embodiment of an ultrasonic motor according to the present invention;
Figure 37 is a diagram illustrating one method of compressing voltages on a piezo-electric ring of an ultrasonic motor according to the present invention; and
Figure 38 is a diagram illustrating another method of impressing voltages on a piezo-electric ring of an ultrasonic motor according to the present invention.

### First Embodiment

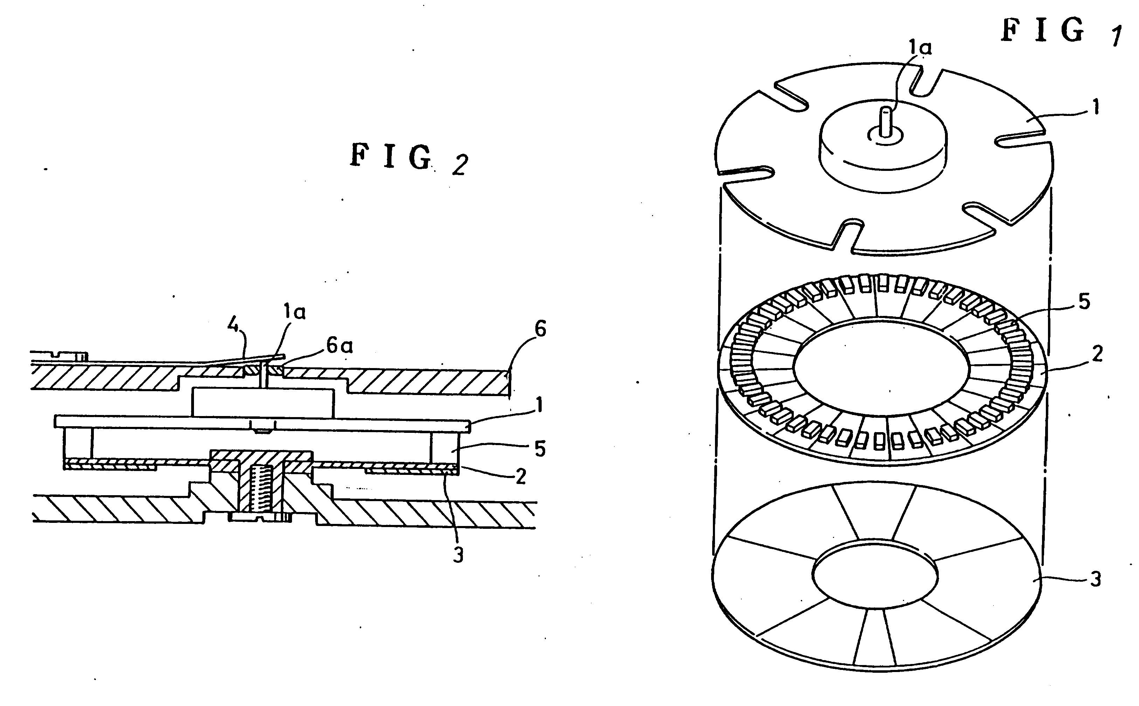

Figure 1 shows a rotor 1, a stator or vibrator 2 and a piezo-electric element ring 3 which comprise the principal parts of a first embodiment of an ultrasonic motor according to the present invention. Figure 2 is a cross-section of the said first embodiment.

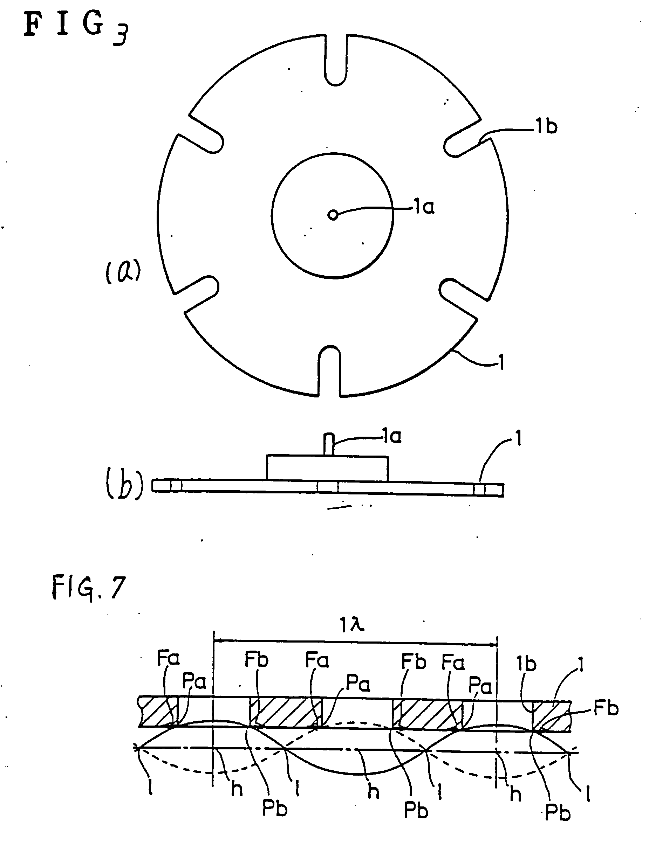

The rotor 1 is in contact with the tops of a plurality of teeth 5 which are arranged in a circle on the stator 2. The rotor 1 has a rotor shaft 1a which is rotatably mounted in a support plate 6 by means of a bearing 6a so it can slide freely in the axial direction. The under surface of the rotor 1 is pressed against the top of the teeth 5 of the stator 2 by a spring 4 fixed to the support plate 6. The rotor 1, as shown in Figure 3, is disc-shaped with the rotor shaft 1a as its centre. The rotor 1 has notches 1b, which are of a prescribed depth and number, the latter being the same as that of the antinodes of the standing waves generated on the stator 2. The notches 1b are formed on the outer circumference of the rotor in six equi-angularly spaced apart locations.

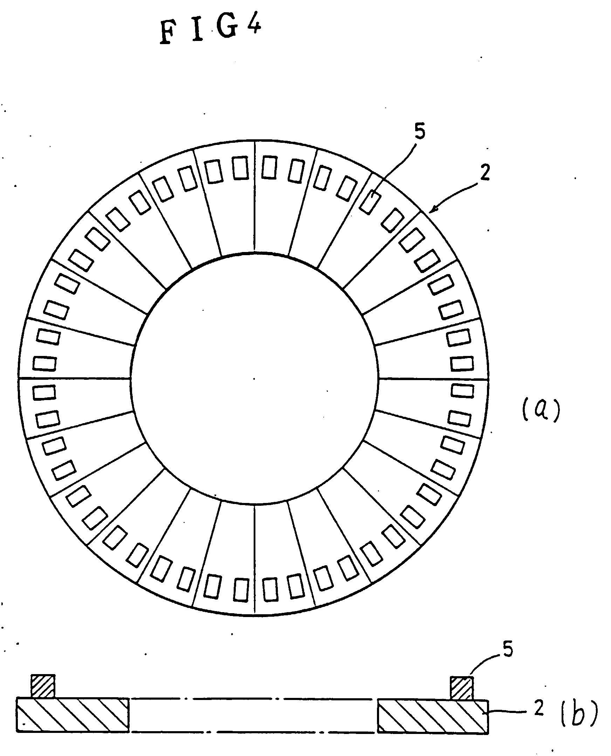

As shown in Figure 4, the teeth 5 are arranged in a circle on the surface of the stator 2, there being forty eight teeth 5 which are equi-angularly spaced apart and arranged at the same radial distance from the centre of the stator 2. The number of teeth 5 is determined, as shown in the Table below, by the number of wavelengths of the standing wave generated on the stator 2 and the stepping angle (angle of rotation) required by the rotor 1 of the ultrasonic motor.

**TABLE**

| Number of Wavelengths | Step Angle | Number of teeth (n: whole number) |
|---|---|---|
| 3λ | 15.00 | 24 x n |
| 4λ | 11.25 | 32 x n |
| 5λ | 9.00 | 40 x n |

In the Table above, the column headed "Number of Wavelengths" refers to the number of wavelengths of the standing wave formed on the stator 2 by the piezo-electric ring 3; the "stepping angle" is the minimum angle of rotation required by the rotor 1; and the "number of teeth" indicates the number of teeth 5 formed on the stator 2. The resonance frequency of the standing wave varies mainly according to the thickness and shape of the stator.

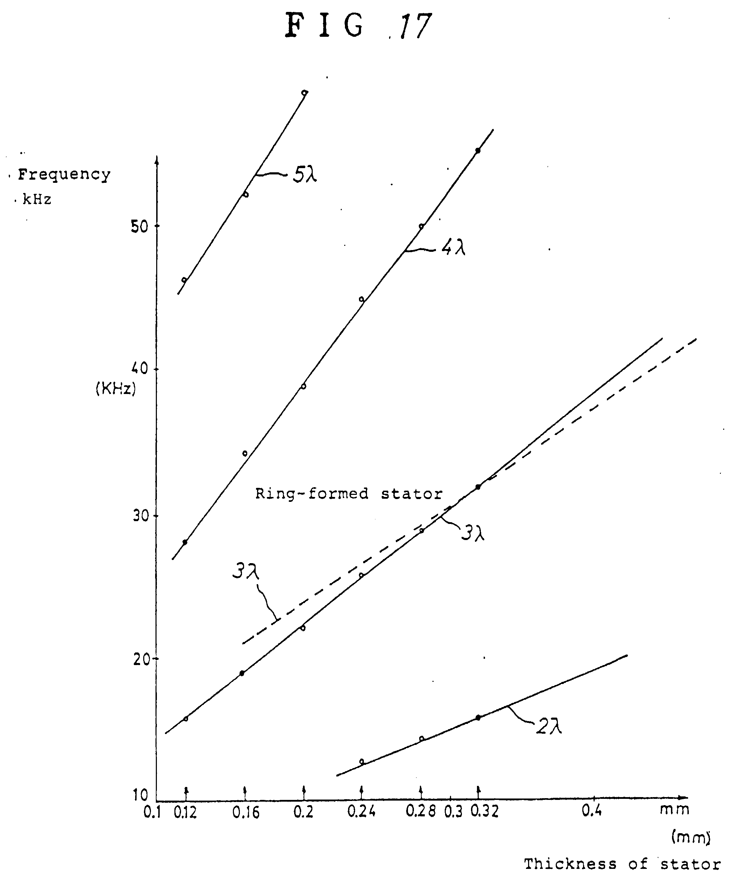

Figure 17 shows the relationship between the thickness and the resonance frequency in a disc-shaped stator at each wavelength (2λ to 5λ ) formed on the stator. The resonance frequency when a standing wave of 3λ is formed on a ring-shaped stator is indicated by the broken line. In the case of the stator used in this embodiment, resonance frequencies nearly like those shown below are obtained.
3λ 32 kHz
2λ 17 kHz
4λ 50 kHz

In the said first embodiment, a standing wave with a resonance frequency of about 32 kHz is used to form a standing wave of three wavelengths on the piezo-electric ring 3.

In the said first embodiment, teeth 5 of the same shape are formed at equal angular intervals around the entire circumference in the numbers shown in the Table. However, in the case of a standing wave of 3λ and a stepping angle of 15 degrees, for example, twenty four groups of teeth 5 may be formed with a plurality of different shapes and still satisfy the configuration requirements of the invention as long as the stator 2 has a surface shape which has an overall rotational symmetry over 24 rotations. Of course, indentations or other types of level differences may be formed in the surface of the stator 2 instead of teeth.

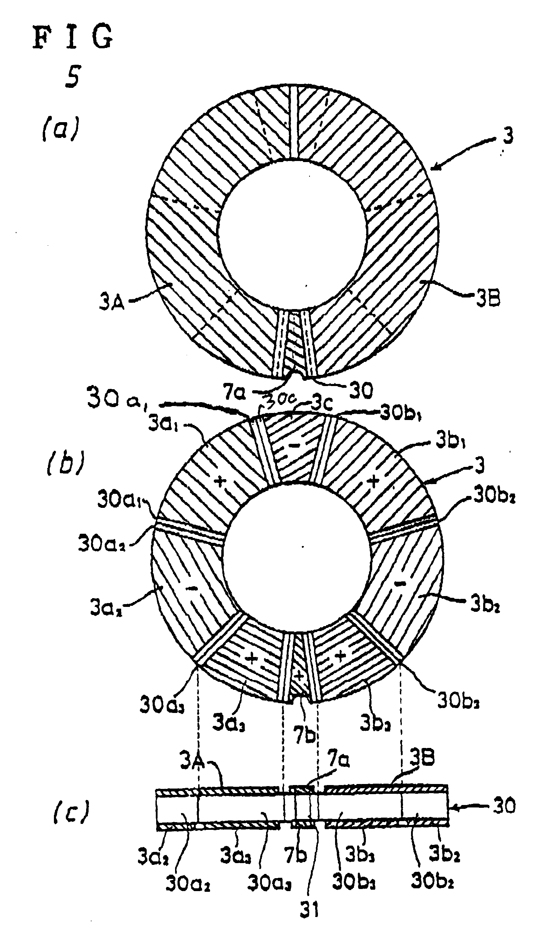

The piezo-electric element 3 is fixed to the under surface of the stator 2, and as shown in Figure 5(a), 5(b) and 5(c), the piezo-electric element 3 is made up of a piezo-electric ring 30 and electrodes 3a₁, 3a₂, 3a₃, 3b₁, 3b₂, 3b₃, 3c formed from silver paste. The piezo-electric ring 30 has a first group of piezo-electric sub-elements 30ₐ₁, 30ₐ₂, 30ₐ₃, and a second group of piezo-electric sub-elements 30_{b1}, 30_{b2} and 30_{b3}. An A phase may be formed on the piezo-electric sub-elements 30ₐ₁, 30ₐ₂, and 30ₐ₃ and a B phase may be formed on the piezo-electric sub-elements 30_{b1}, 30_{b2} and 30_{b3}.

Each of the piezo-electric sub-elements 30ₐ₁, 30ₐ₂ and 30ₐ₃, and 30_{b1}, 30_{b2} and 30_{b3} are polarized (poling) in that order in alternately opposite directions. The directions of polarization are indicated by + and - in Figue 5(b).

An A phase electrode 3A and a B phase electrode 3B, as shown in Figure 5(a), are formed on the top surface of the piezo-electric ring 3, and pilot electrodes 7a, 7b are formed on the opposite surfaces of a piezo-electric sub-element 31 (Figure 5(c)). The pilot electrodes 7a, 7b are used to detect the strength of the wave generated on the piezo-electric ring 30. By feeding the detected value back to a drive circuit described below, the frequency of the drive signal can be adjusted to conform to the resonance frequency of the stator 2 so that the ultrasonic motor can be driven with high efficiency.

The electrode 3c is arranged to apply a voltage to a sub-element 30c which constitutes a spacer means for producing a spatial phase difference between the phases A and B, so making the drive area large.

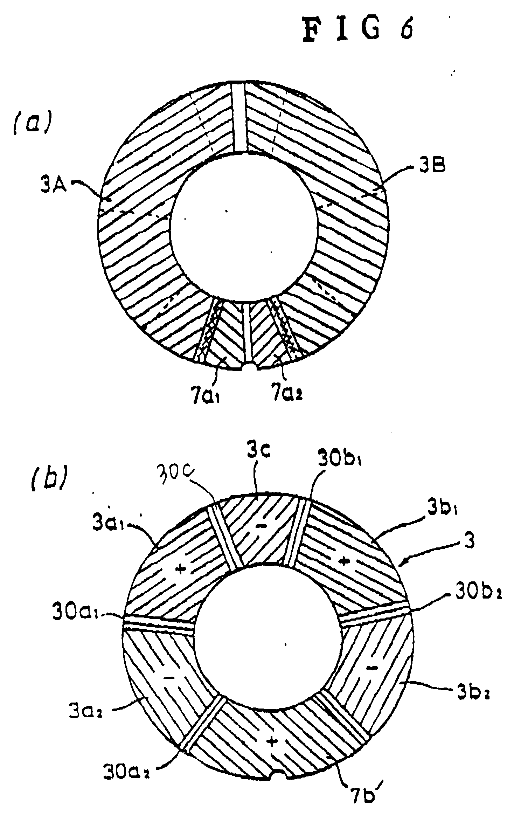

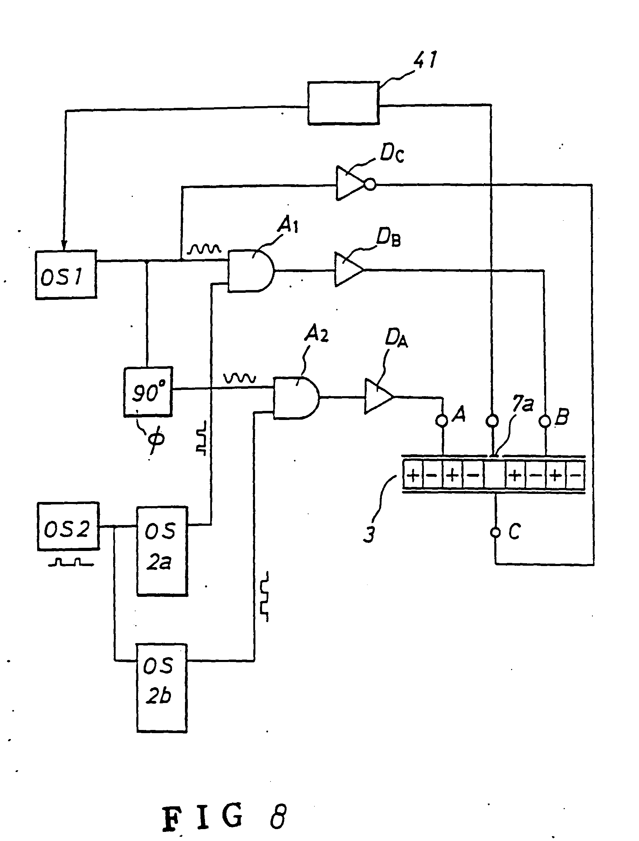

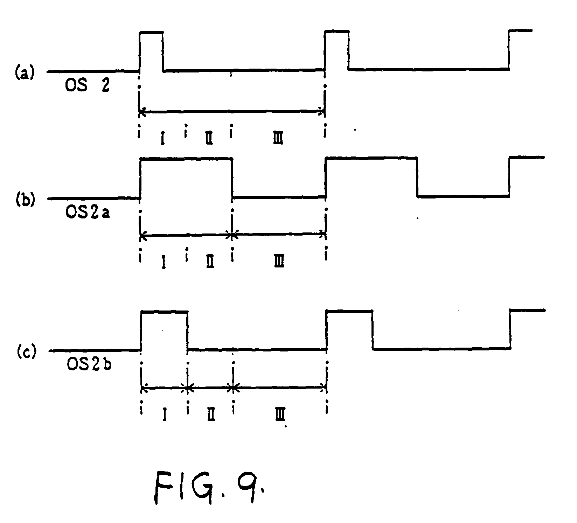

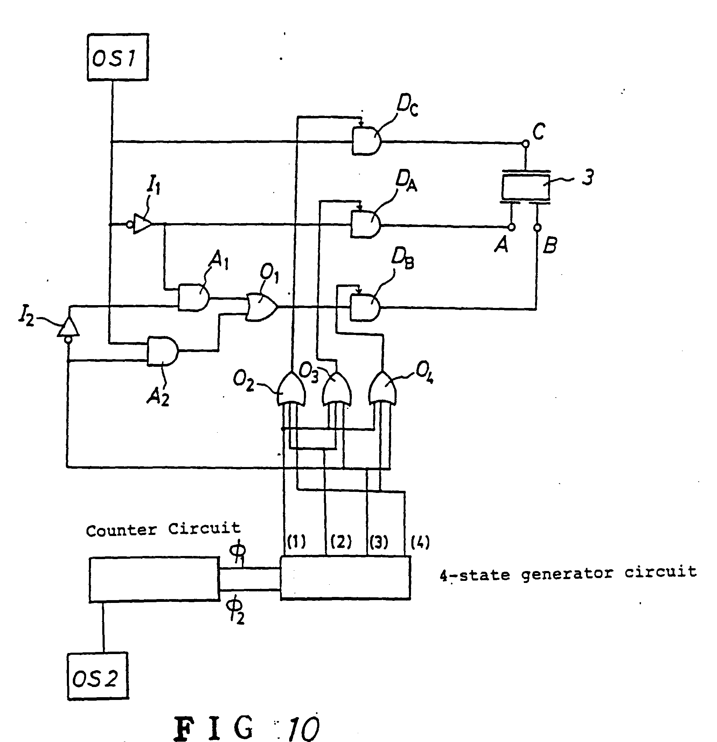

As shown in Figure 6, there are cases in which two pilot electrodes 7ₐ₁ and 7ₐ₂ are used, in which case it is possible to adjust the frequency of the drive signal separately for the standing waves based on the A phase and B phase. Particularly when the A phase and B phase resonance frequencies of the stator 2 differ due to structural variations, the drive efficiency of the motor can be further improved by setting separate drive frequencies for the A phase and the B phase. In this case, the piezo-electric sub-elements 30ₐ₁ and 30ₐ₂ each occupy arcs of 60 degrees on the piezo-electric ring 30. A pilot electrode 7b' is shown in Figure 6(b), the pilot electrode 7b' extending over the aggregate of the areas of the sub-elements 3a₃, 3b₃ and the pilot electrode 7b of Figure 5. When a voltage is impressed on the A phase comprising the piezo-electric sub-elements 30ₐ₁, 30ₐ₂ and 30ₐ₃, shown in Figure 5, a standing wave of 3 λ is formed on the piezo-electric ring 30. In a similar manner, the piezo-electric sub-elements 30_{b1} and 30_{b2} each occupy arcs of 60 degrees, and when voltage is supplied to the B phase, a standing wave of 3 λ is formed on the piezo-electric ring 30.

The piezo-electric sub-elements 30ₐ₃ and 30_{b3} each occupy arcs of 37.5 degrees, the piezo-electric sub-element 31 occupies an arc of 15 degrees and the piezo-electric sub-element 30c occupies an arc of 30 degrees, and as a result the A phase and the B phase are formed on the piezo-electric ring 30 so that their periods are mutually shifted 30 degrees, i.e. one fourth of a period.

As shown in Figure 5(b), however, sub-element electrodes 3ₐ₁, 3ₐ₂, 3ₐ₃, 3c, 3_{b1}, 3_{b2}, 3_{b3} and 7_{b} are formed for each of the sub-elements on the under surface of the piezo-electric ring 3. By bringing the under surface shown in Figure 5(b) into conductive contact with the under surface of the stator 2, the stator 2 itself becomes the common electrode for the piezo-electric ring 3.

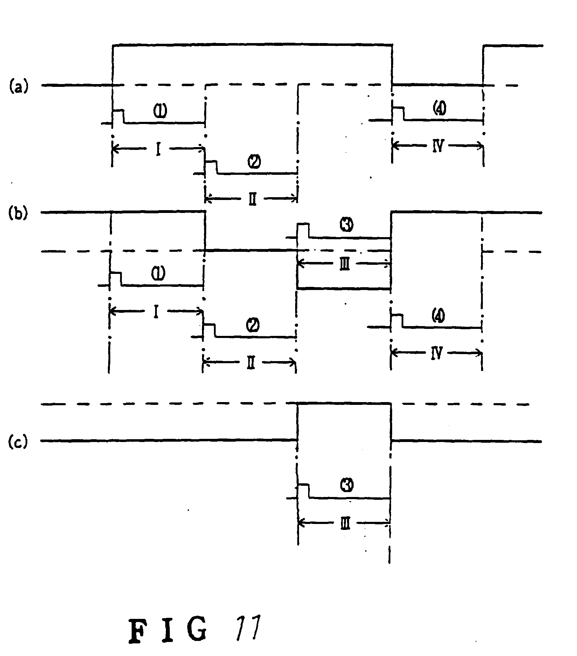

Since, as shown in Figure 7, the rotor 1 contacts the top of the standing wave generated on the stator 2 to which the piezo-electric ring 3 is attached as described above, when the sums of the stresses Fₐ and F_{b} exerted on the bottom edges Pₐ and P_{b} of the side walls of the notches 1b by the stator 2 are unequal, the rotor 1 receives a couple due to the stress difference and is rotated.

However, when the notches 1b of the rotor 1 move directly over the position of the antinodes n of the standing wave, the right and left stresses Fₐ and F_{b} become balanced, and therefore the rotor 1 rests over this balanced position as long as the standing wave remains stabilized.

Therefore, the angle of rotation of the rotor 1 can be positioned with high accuracy by generating a standing wave on the stator 2, and especially high reliability can be achieved when using the ultrasonic motor as a drive motor for clocks and watches. Further, in the said first embodiment, teeth 5 which are arranged symmetrically angularly of the vibrator 2 are provided on the stator 2, the teeth 5 being spaced from one another by one part of 2n parts of the wavelength of the standing wave, where n is a whole number of at least 3 and therefore when the rotor 1 is precisely stepped in accordance with this spacing, the correlation between the shape of the non-contact areas of the rotor 1 and the surface shape of the stator 2 remains constant. Conversely, since the position at which the stress between the non-contact areas of the rotor 1 and the teeth 5 on the stator 2 becomes balanced remains constant with respect to the phase of the standing wave, and since the interval of the stepping operation remains constant, the accuracy of the stepping angle is further improved.

In the piezo-electric ring 30, the A phase and the B phase are formed so that they are linearly symmetrical with respect to both the disposition and the polarity of the sub-elements. As a result, it becomes easier to make the output characteristics the same for the drive signals of the A phase and the B phase, and the vibration strength at the resonance frequency of the stator 2 and the prescribed drive frequency can be made the same, thus improving the drive efficiency of the ultrasonic motor.

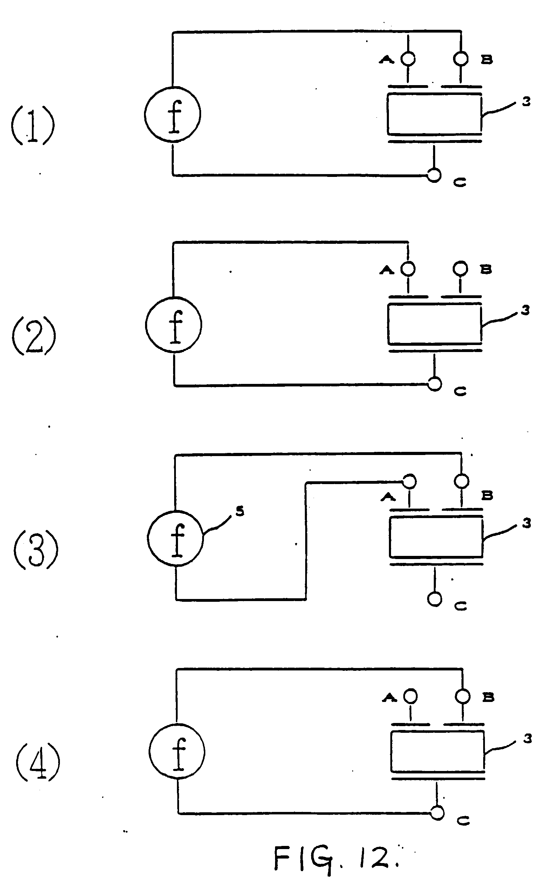

Figure 8 shows an example of a drive circuit which supplies drive signals for the piezo-electric ring 30 shown in Figure 5. In this drive circuit, the drive signals for the piezo-electric element 3 are supplied by a terminal A connected to the A phase electrode 3A, a terminal B connected to the B phase electrode 3B, and a common terminal or electrode C connected to the stator 2 and thus connected to the sub-element electrodes 3ₐ₁, 3ₐ₂, 3ₐ₃, 3_{c}, 3_{b1}, 3_{b2}, 3_{b3} and 7_{b}. The pilot electrode 7a detects the strength of the wave generated on the piezo-electric ring 30.

A control signal of the prescribed frequency is supplied to an AND gate A₁ from an oscillation circuit OS1 and a control signal whose phase is delayed 90 degrees is supplied to an AND gate A₂ from a phase modulation circuit. An oscillation circuit OS₂, however, supplies a reference pulse for one-shot circuits OS₂ₐ and OS_{2b}, and these supply a gate signal to the AND gates A₁ and A₂.

While this gate signal is being supplied, the AND gate A₂ outputs a control signal to a driver D_{A}, a drive signal in sync with the control signal is sent to the terminal A, the AND gate A₁ outputs a control signal to the driver D_{b}, and a drive signal is sent to the terminal B in the same manner.

During this period, a control signal is supplied from the constant oscillation circuit OS1 to a driver D_{c}, and an inverted signal with respect to the drive signal which is supplied to the terminal A and the terminal B is supplied to the terminal C.

The operation of the drive circuit is explained with reference to the timing chart of Figure 9.

Figure 9(a) shows the reference pulse of the oscillation circuit OS2, and the one-shot circuits OS₂ₐ and OS_{2b}, to which the reference pulse is inputted, supply the gate signals shown in Figure 9(b) and (c) to the AND gates A₁ and A₂, respectively.

As a result, both the AND gates A₁ and A₂ become open during the period I shown in Figure 9, and drive signals with a mutual phase difference of 90 degrees are impressed on the A phase and B phase of the piezo-electric element 3. Therefore, the waves generated by the piezo-electric sub-element rows of the A phase and B phase which are formed with a mutual spatial shift of one-fourth of a period, are combined to form a progressive wave on the piezo-electric ring 30.

In period II, the AND gate A₂ is cut off and the drive signal from the driver D_{A} is not supplied to the terminal A. Consequently, the drive signal is supplied to only the B phase of the piezo-electric ring 30 and a standing wave determined by the period of the B phase is generated on the piezo-electric ring 30. In period III, both AND gates A₁ and A₂ are cut off and no drive signal is supplied to either terminal A or B, and so no voltage is impressed on the piezo-electric ring 30 and no wave of any kind is generated.

By means of this drive circuit, first a progressive wave is formed on the stator 2 in period I, and since the contact areas of the rotor 1 and the stator 2 are stressed in the reverse direction of the wave as the wave progresses, the rotor 1 continuously rotates. Next, in period II, since a standing wave based on only the B phase of the piezo-electric ring 30 is formed on the stator 2, the rotor 1 rests at a prescribed position determined by the position of the nodes and antinodes of the standing wave. In period III, no wave is generated on the piezo-electric ring 30, and so the rotor 1 is maintained in a resting condition.

In this way, the angle of rotation of the rotor 1 can be determined by the length of period I, and after the rotation of the rotor 1 is brought to a rest in period II, the motor goes to a stop condition in which the rotor is retained in a rest position by the spring 4 and the vibration of the piezo-electric ring 30 is dissipated.

The angle of rotation of the rotor 1 is determined by the resting position due to the standing wave in period II, but even when a shift equivalent to less than ±1/4 of a wavelength of the standing wave occurs in the position of the rotor 1 at the end point of period I, the rotor 1 returns correctly to the same resting position due to the balanced stress. Therefore, it is possible to rotate the rotor 1 precisely for the prescribed step angle and at each prescribed time without having to detect the position of the rotor 1 or to provide a feedback circuit. Moreover, in period III, the operation of the drivers D_{A} and D_{B} stops, thus reducing the amount of power required, and so this drive method is highly suited to ultrasonic motors for clocks and watches.

As shown in Figure 8, the strength of the wave generated on the piezo-electric ring 30 which vibrates as described above, is detected by detecting the voltage constantly generated at the pilot electrode 7a, and the detection output is supplied to a feedback control circuit 41. In the feedback control circuit 41, the actual wave strength, which is detected at the time when the maximum strength should be obtained, is compared with the maximum strength generated in the piezo-electric ring, and the oscillation frequency of the oscillation circuit OS1 is feedback-controlled so that the actual maximum strength obtained becomes the maximum strength set in advance. Therefore, by means of the drive circuit of Figure 8, the ultrasonic motor can always be driven with high efficiency. In this embodiment, the non-contact areas 1b of the rotor 1 were formed in six locations and the step angle was 60 degrees, but the step angle can be made smaller by increasing the frequency of the standing wave formed on the piezo-electric ring 30 and by increasing the number of non-contact areas of the rotor 1 accordingly.

In all the further embodiments described below, the rotor has angularly spaced apart non-contact areas which correspond to the notches 1b of Figure 1, these areas being out of contact with the stator and being spaced from each other by half the wavelength of vibration.

### Second Embodiment

In this embodiment, the rotor 1, the stator 2 and the piezo-electric element 3 are the same as in the first embodiment, so that their explanation is omitted here and the same parts are designated by the same numbers.

Figure 10 shows the drive circuit of the ultrasonic motor of the second embodiment. The control signal output from an oscillation circuit OS1 is inputted to a driver D_{C} which then outputs a drive signal to a common terminal C of the piezo-electric element 3. This control signal is converted to an inverted signal by an inverter I₁ and is then inputted to a driver D_{A} which then outputs a drive signal to a terminal A. A selector circuit comprising AND circuits A₁ and A₂, an OR circuit O₁ and an inverter I₂ is configured to selectively input the control signal and an inverted signal to a driver D_{B} which outputs a drive signal to a terminal B. A reference signal is outputted from an oscillation circuit OS2 and passes through a counter circuit and a 4-state generator circuit, whereby 1-s pulse signals are sequentially outputted and converted to state signals (1), (2), (3) and (4) so that they become one 4-s sequence. In addition to entering the selector circuit, these state signals control drivers D_{C}, D_{A} and D_{B} via OR circuits 0₂, 0₃ and 0₄. The drivers D_{C}, D_{A} and D_{B} each become 3-state drivers which output both high and low levels and also are cut off and go to a high output impedance state based on the above state signals.

Figure 11(a) shows the output states of the driver D_{A}, which supplies a drive signal to terminal A, when the state signals (1), (2) and (3) are outputted and go to a high output impedance state in period IV.

Figure 11(b) shows the output states of the driver D_{B}, which supplies a drive signal to terminal B, when the state signals (1), (3) and (4) are outputted and go to a high output impedance state in period II.

The above selector circuit is provided in the stage before the driver D_{B}, and since the state signal (3) from the 4-state generator circuit is inputted to the selector circuit, a signal (inverted signal) whose phase is shifted 180 degrees from the drive signal of the driver D_{A} is outputted to the terminal B in period III.

Figure 11(c) shows the output states of the driver D_{c}, which supplies a drive signal (inverted signal) to the common terminal C when the state signals (1), (2) and (4) are outputted and go to a high output impedance state in period III.

When these state signals are outputted in sequence from (1) to (4), the piezo-electric element 3 is driven by connection conditions such as shown in Figure 12 (1) to (4). That is, when the state signal (1) is outputted, an AC voltage based on the drive signal is impressed with the same phase on both the A phase and the B phase of the piezo-electric ring 30 in period I as shown in Figure 12 (1). When the state signal (2) is outputted, an AC voltage is impressed on only the A phase of the piezo-electric ring 30 in period II as shown in Figure 12 (2). When the state signal (3) is outputted, AC voltages whose phases are mutually shifted 180 degrees are impressed on the A phase and the B phase of the piezo-electric ring 30 in period III since the common electrode C positioned opposite terminals A and B is cut off and goes to a floating potential as shown in Figure 12 (3). Finally, when the state signal (4) is outputted, an AC voltage is impressed on only the B phase of the piezo-electric ring 30 in period IV.

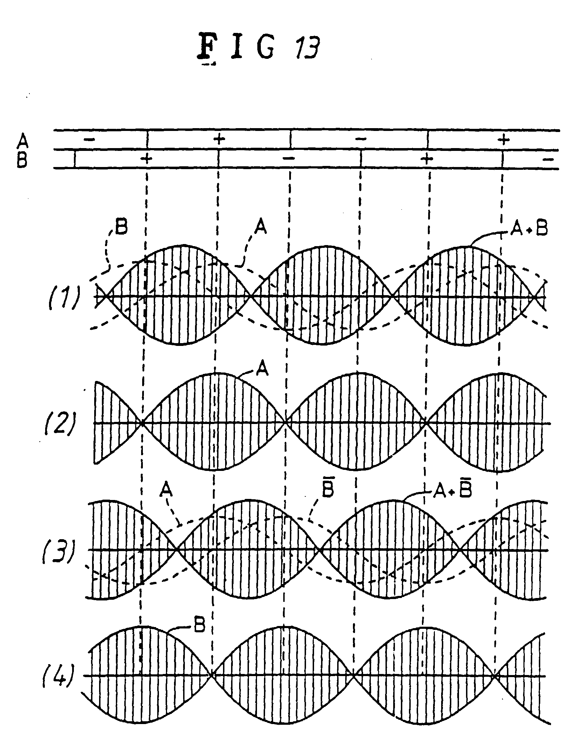

In this way, by changing the drive condition in four stages from period I to period IV, a composite standing wave A+B, which is produced by the standing wave A based on deformation of the A phase and the standing wave B based on deformation of the B phase and which are in the same phase, is generated on the piezo-electric ring 30 in period I as shown in Figure 13 (1). In period II, a standing wave A based on deformation of only the A phase is generated as shown in Figure 13 (2). In period III, a composite standing wave A+o(B,sUP12(_)) produced by the standing wave A based on deformation of the A phase and the standing wave B based on deformation of the B phase whose phase is shifted 180 degrees is generated as shown in Figure 13 (3). In period IV, the standing wave B based on deformation of only the B phase is generated. As a result, all the phases of standing waves formed from period I to period IV are different, and the positions of the nodes or antinodes of those standing waves sequentially shift one-eighth of a wavelength at a time. Therefore, stepping operation of the rotor 1 becomes possible by sequentially repeating these four stages.

This second embodiment is distinguished by the fact that it uses only standing waves to perform stepping operation and does not use any progressive waves such as were used in the prior art. Therefore, since the position of the rotor 1 is dependent on only the phase of the standing wave, there is absolutely no margin for the angle of rotation to become imprecise as in drive by progressive waves. Since the driver connected to the electrode not being used can be set to a high output impedance condition by using 3-state drivers such as the drivers D_{C}, D_{A} and D_{B} of the drive circuit, a composite standing wave such as that shown in Figure 13 (3) can be generated by the connection method shown in Figure 12 (3) and the configuration of the drive circuit can be made simpler than in the prior art. In addition, when a drive signal is not supplied to terminal B or terminal A in order to cause deformation of only the A phase or the B phase, the flow of power from the terminal not being used stops, so that drive efficiency is improved. Moreover, since the time to stabilization of the vibration condition is shortened when switching occurs, high speed drive becomes possible.

### Third Embodiment

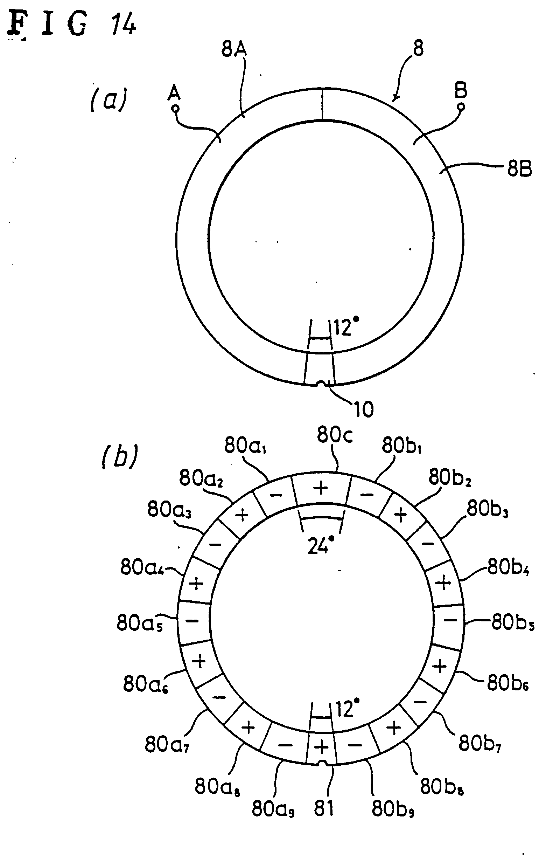

The ultrasonic motor of the third embodiment is used to drive the seconds hand of a clock or watch directly and a piezo-electric element 8 shown in Figure 14 is used in place of the piezo-electric element 3 in the first embodiment.

Figure 14(a) shows a surface (i.e. the surface not attached to the stator 2) of the piezo-electric element 8, and on this surface there are formed an A phase electrode 8A, a B phase electrode 8B and a pilot electrode 10.

Figure 14(b) is a diagram of the under surface of the piezo-electric element 8 with each of the sub-element electrodes omitted, where the piezo-electric sub-elements 80ₐ₁, 80ₐ₂,..., 80ₐ₉ are formed as the piezo-electric sub-element row A, and the piezo-electric sub-elements 80_{b1}, 80_{b2},..., 80_{b9} are formed as the piezo-electric sub-element row B, the piezo-electric sub-elements being alternately polarized in opposite directions. The A phase and the B phase are established so that they each form a 10-period standing wave around the circumference of the piezo-electric element 8, and each piezo-electric sub-element occupies a sector of 18 degrees. A piezo-electric sub-element 80c occupies a sector of 24 degrees, and a piezo-electric sub-element 81 occupies a sector of 12 degrees. One half of the piezo-electric sub-element 80c is used for phase A and the other half is used for phase B. As a result, the A phase and the B phase are established at positions which are mutually shifted one-sixth of a phase.

In this embodiment, a rotor 1 is used in which non-contact areas 1b (Figure 3) are located at twenty equally spaced positions along the outer circumference of the rotor 1 so that they agree with the frequency of the standing waves 10 generated on the stator 2 based on deformation of the piezo-electric element 8, there being ten standing waves in this embodiment.

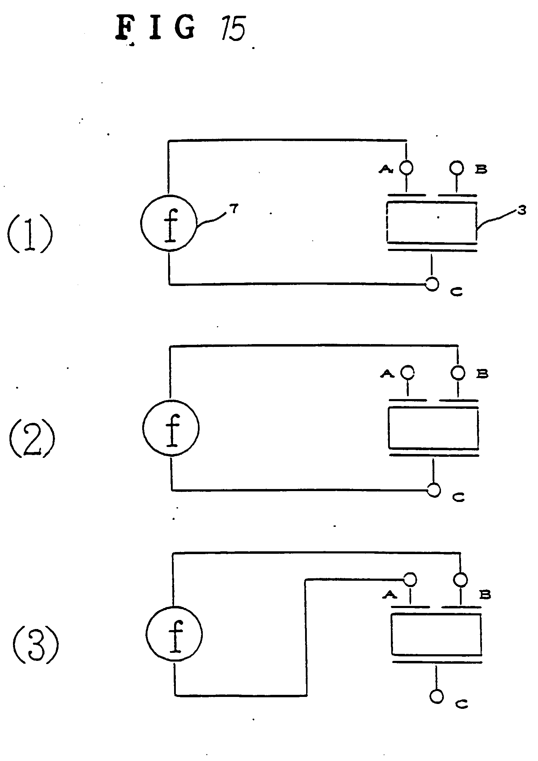

As shown in Figure 15 (1) to (3), in the method by which the ultrasonic motor of the third embodiment is driven, the drive condition (1) which cuts off the terminal B and inputs the drive signal between the terminal A and the common terminal C, the drive condition (2) which cuts off the terminal A and inputs the drive signal between the terminal B and the common terminal C, and the drive condition (3) which cuts off the common terminal C and inputs the drive signal with a phase shifted 180 degrees between the terminal A and the terminal B are repeated in sequence (a reverse sequence is also possible) and the rotor 1 is stepped one-sixth of one wavelength each time on the stator 2. Here, the drive circuit can be operated by repeatedly outputting the three state signals (2) to (4) in the circuit configuration described in the second embodiment and shown in Figure 10.

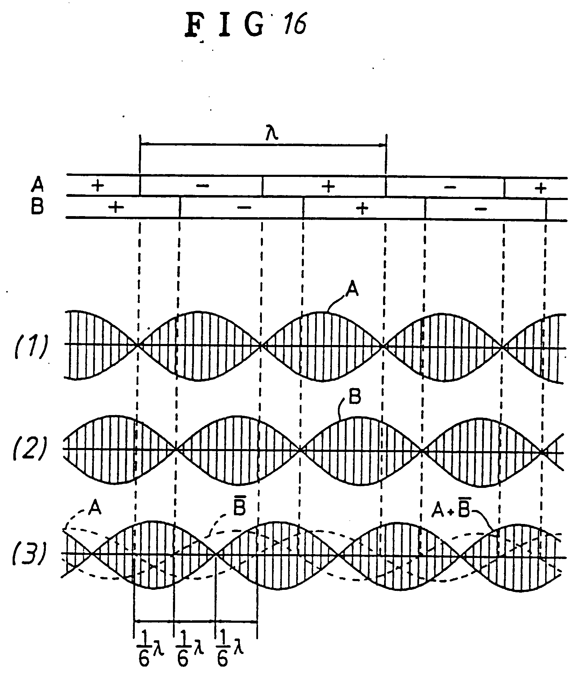

In drive condition (1), as shown in Figure 16 (1), the standing wave A is generated based on deformation of only the A phase of the piezo-electric sub-element row; in drive condition (2), as shown in Figure 16 (2), the standing wave B is generated based on deformation of only the B phase; and in drive condition (3), as shown in Figure 16 (3), a composite standing wave A+o(B,sUP12(_)) is generated as a composite of the standing wave A and the standing wave o(B,sUP12(_)) whose phase is shifted 180 degrees from that of the standing wave B. By sequentially repeating these drive states (1) to (3), the positions of the nodes or antinodes of the standing wave move one-sixth of the wavelength of the standing wave, thus making it possible to step the rotor 1 as in the second embodiment. Since the stepping angle is 6 degrees, the seconds hand of the clock or watch can be driven directly by the rotation of the rotor 1 without having to employ a rotation transfer mechanism.

In both the second and third embodiments described above, the rotor could be accurately rotated by exactly the amount of the phase difference between standing waves by using only standing waves, but by matching the frequency of the drive signal with a particular resonance frequency, the vibration displacement of the piezo-electric element follows an elliptical path, and by matching the horizontal component on the elliptical path with the direction of rotation of the rotor 1, the stress in the horizontal direction based on the horizontal component can be used to promote the rotation of the rotor 1. The period of the stepping operation can be varied by the interval of the state signals, etc.

### Fourth Embodiment

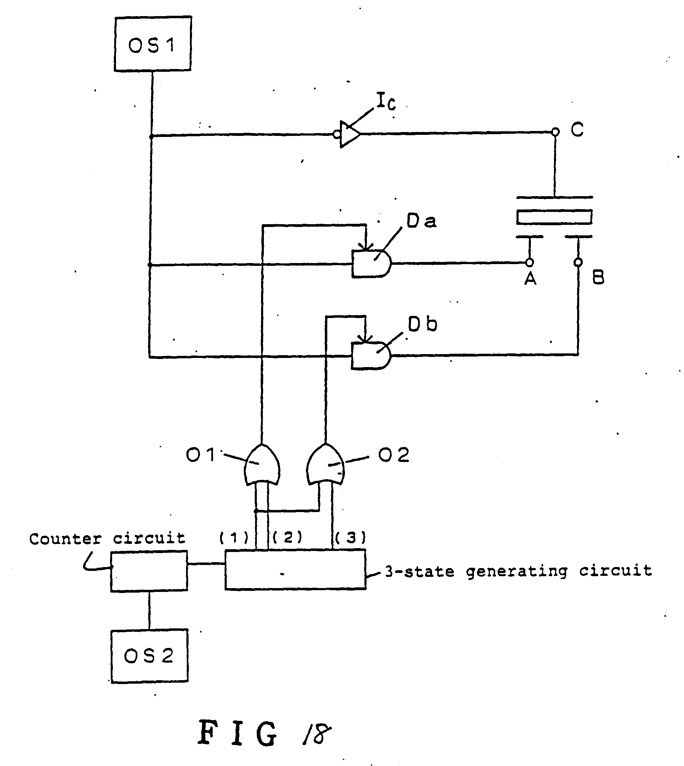

Figure 18 is a schematic representation of the drive circuit of an ultrasonic motor of the present invention. A control signal output from an oscillation circuit OS1 becomes an inverted signal in an inverter Ic so that a drive signal is outputted to a common terminal C of the piezo-electric element 3. This control signal is also inputted to drivers Da and Db so that drive signals are outputted to the terminals A and B. The reference signal is outputted from an oscillation circuit OS2 and passes through a counter circuit and 3-state oscillation circuit, whereby it is converted to the state signals (1), (2) and (3), which sequentially output pulses at 1-s intervals to form 3-s sequences. These state signals control the drivers Da and Db via OR circuits 01 and 02. The drivers Da and Db are each three-state drivers which output both high and low levels and also are cut off and go to a high output impedance condition based on the above state signals.

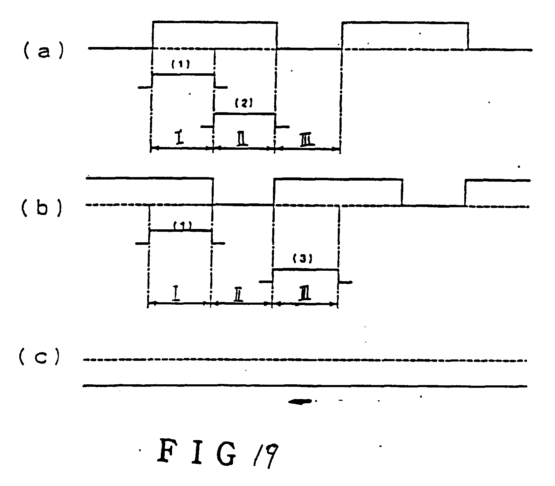

Below is an explanation of the operation of the above drive circuit referring to Figure 19.

Figure 19(a) shows the output conditions of the driver Da. When the state signals (1) and (2) are outputted to the driver Da, the driver Da supplies a drive signal to terminal A, and in period III the driver goes to a high output impedance condition.

Figure 19(b) shows the output conditions of the driver Db. When the state signals (1) and (3) are outputted to driver Db, the driver supplies a drive signal to terminal B, and in period II the driver goes to a high output impedance condition.

Figure 19(c) shows the output conditions of the driver Dc, which outputs an inverted signal to the common terminal C.

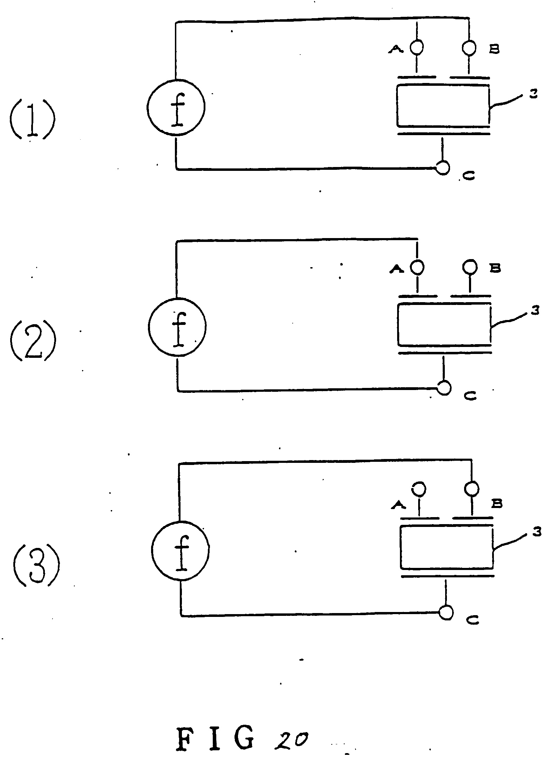

When these state signals are outputted in sequence from (1) to (3), then the piezo-electric element 3 is driven by the connection conditions shown in Figure 20 (1) to (3). That is, when the state signal (1) is outputted, an AC voltage is impressed with the same phase on both the A phase and B phase of the piezo-electric ring 30 in period I based on the drive signal as shown in Figure 20 (1), and when the state signal (2) is outputted, an AC voltage is impressed on only the A phase of the piezo-electric ring 30 in period II as shown in Figure 20 (2). When the state signal (3) is outputted, an AC voltage is impressed on only the B phase of the piezo-electric ring 30 in period III as shown in Figure 20 (3).

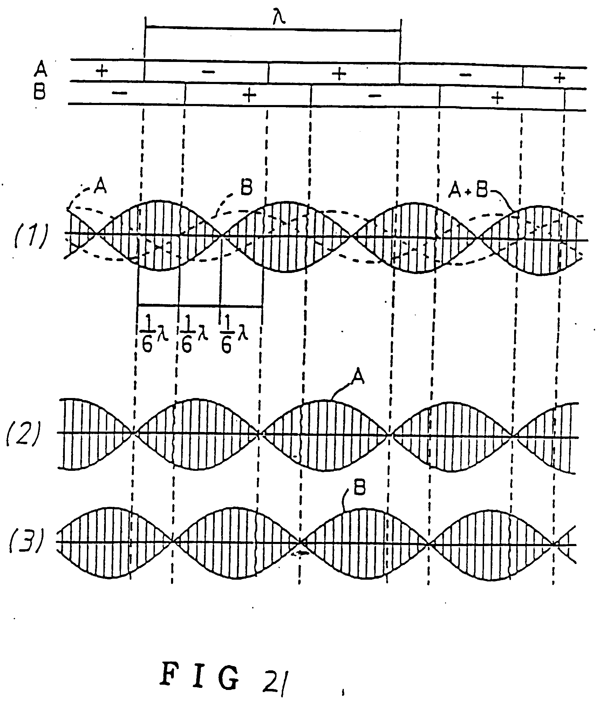

By changing the drive condition in three stages from period I to period III in this manner, the composite wave A+B made up of the standing wave based on deformation of the A phase and the standing wave based on deformation of the B phase in mutually the same phase is generated on the piezo-electric ring 30 in period I as shown in Figure 21(1), the standing wave A based on deformation of only the A phase is generated in period II as shown in Figure 21(2), and the standing wave B based on deformation of only the B phase is generated in period III. As a result, the phases of the standing waves formed from period I to period III all differ and the positions of the nodes or the antinodes of those standing waves are each sequentially shifted one-sixth of a wavelength. Therefore, stepped operation of the rotor 1 is accomplished by sequentially repeating these three stages.

This embodiment is distinguished by the fact that stepping operation is performed using only standing waves and no progressive waves as were used in the prior art. Therefore, since the position of the rotor 1 is solely dependent on the phases of the standing waves, there is no margin for error in the angle of rotation as there is in drive by progressive waves. Further, by using 3-state drivers as each of the drivers Da and Db of the drive circuit, the driver connected to the electrode not being used can be set to a high output impedance state, thus stopping the power flowing from the terminal not being used when the drive signal is not supplied to either the terminal B or the terminal A in order to cause deformation of only the A phase or the B phase, and therefore, in addition to improving drive efficiency, high speed drive becomes possible because the time to stabilization of the vibration condition when the drive condition is switched can be shortened.

### Fifth Embodiment

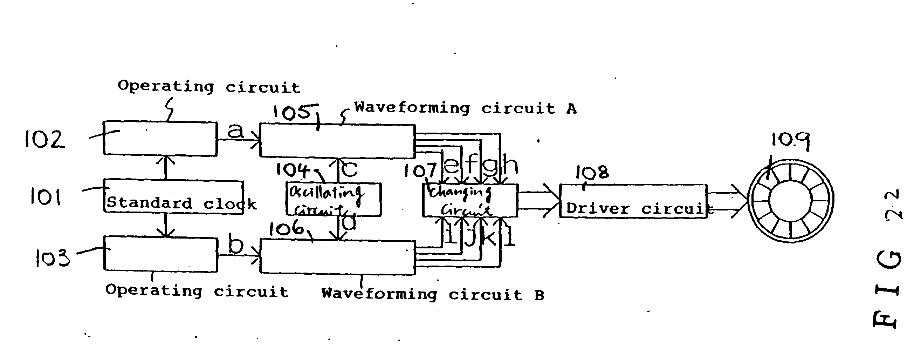

Figure 22 is a generalized block diagram of the ultrasonic motor and drive system of the fifth embodiment of the present invention. In Figure 22, 101 is a reference clock. 102 is an control circuit A which controls the continuous drive of the ultrasonic motor. 103 is the control circuit B which controls the step drive. 104 is an oscillation circuit which produces a signal for oscillating the vibrator attached to the vibrator element (not shown). 105 is a waveform formation circuit A which produces a drive waveform for a continuous drive, and 106 is a waveform formation circuit B which produces a drive waveform for a step drive. A switching circuit 107 sends the output of the waveform formation circuit A in the case of the continuous drive and the output of the waveform formation circuit B in the case of the step drive to a drive circuit 108 which vibrates the vibrator.

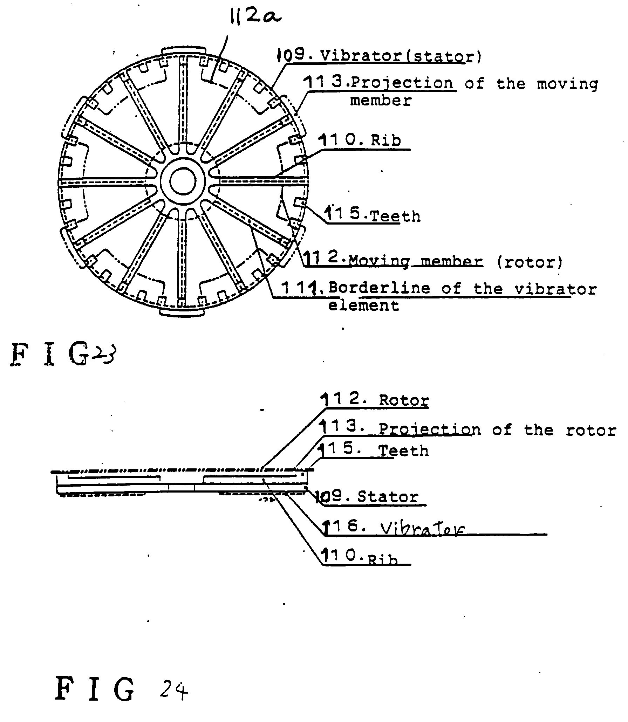

Figure 23 is a top view showing the configuration of the vibrator of the ultrasonic motor in this embodiment of the present invention, and Figure 24 is a cross section of Figure 23 which shows an example of excitation of a 31 vibration mode. The solid lines indicate the shape of a vibrator (stator) 109, on which twelve ribs 110 are formed. The broken lines indicate the borderlines 111 of the vibrator element (piezo-electric ring) and the vibrator sub-elements (electrode pattern) divided up into twelve units. The borderlines 111 in this embodiment correspond to the positions of the ribs 110, and the two 31 vibration modes present are configured so that nodes are formed on the ribs 110. The two-dot chain lines indicate the moving member (rotor) 112 on which are formed six alternately arranged angularly spaced notches 112a and radially outwardly extending projections 113. The projections 113 are in contact with the teeth 115 of the vibrator 109, and in addition to receiving the driving force, they are configured to stop on the vibration nodes.

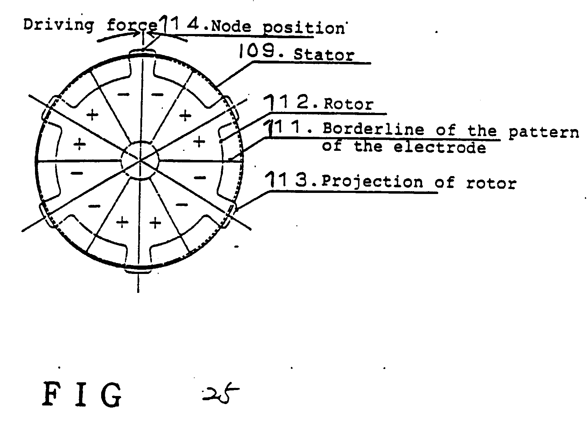

Next is an explanation of the drive method of the ultrasonic motor of this embodiment. The signal output from the reference clock and which passes through the control circuit B in Figure 22 is divided in the waveform formation circuit B, with a built-in inverter, into two poles: a + signal which retains the original phase and a - signal whose phase is inverted. The oscillation circuit vibrates the vibrator with a 31 resonance frequency which it sends to the vibrator via the switching circuit and the drive circuit. The action of the rotatable member of the ultrasonic motor at this time is described with reference to Figure 25. When a signal with an inverted phase is impressed on the vibrator sub-elements indicated by - as opposed to the vibrator sub-elements indicated by +, then a standing wave which forms a node at the position indicated by the one-dot chain line 114 is excited, and the protrusions on the moving member move to the node and stop. The principle of the drive force is explained in detail in Japanese Patent Application No. 1-1273082.

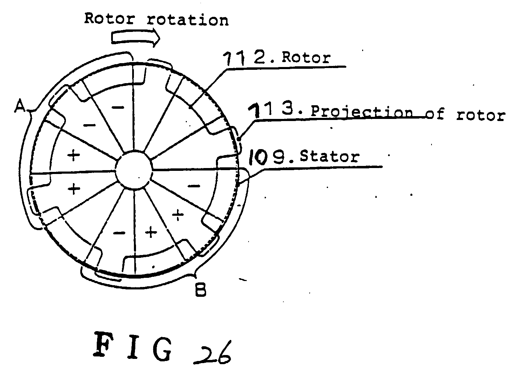

Next, the signal output from the reference clock and which passes through the control circuit A is divided up in the waveform formation circuit A, with a built-in 90-degree phase shifter and inverter, into signals whose phases are shifted 90 degrees and which are each then divided up into + signals which retain the original phase and - signals whose phase is inverted for a total of four poles. The oscillation circuit vibrates the vibrator with a 31 resonance frequency which it sends to the vibrator via the switching circuit and the drive circuit. The action of the rotatable member of the ultrasonic motor at this time is described with reference to Figure 26. Signals whose phase is shifted 90 degrees are impressed on the vibrator sub-elements indicated by B as opposed to the vibrator sub-elements indicated by A and then signals whose phase is inverted to + and -, respectively, are impressed. At that time, a progressive wave is excited on the vibrator and the rotatable member moves in the direction of the arrow. The principle of the drive force is explained in detail in JP-A-58-148682.

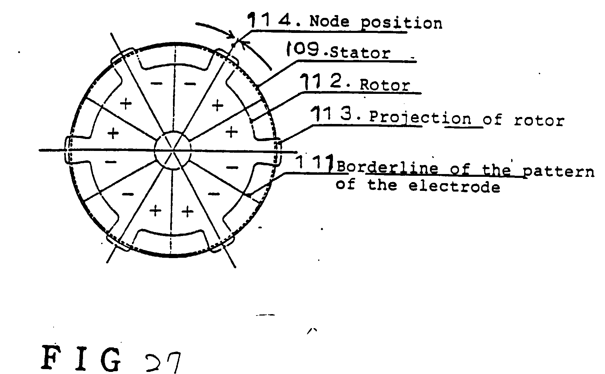

When sufficient time for the rotor to rotate a certain amount has elapsed (within the time required for the moving element to rotate 30 degrees in this embodiment), then the signal is stopped by the control circuit A and is outputted from the control circuit B. The signal at this time produces the position shown in Figure 27 by means of the waveform formation circuit B. A node is formed at the position 114 shown in Figure 27, and the respective rotor projections 113 move to and stop at the node position. The signal is stopped by the control circuit B for a period of time sufficient to allow the respective rotor projections 113 to move to the node position. The rotor moves 30 degrees by this series of actions. Step drive in 30-degree increments is performed by repeating this series of actions.

When excitation from standing wave to standing wave is performed without using progressive waves, then the projections on the moving member 112 may become positioned over antinodes, rotation may stop, or reverse rotation may occur. Also, drive using only progressive waves requires feedback control. By performing this standing wave-progressive wave-standing wave-progressive wave action, a stepped drive not requiring a rotation detection mechanism becomes possible.

The explanation of this embodiment assumed a 31 mode, but 21, 41 and 51 modes are possible, at which time drive in 8 divisions, 16 divisions and 20 divisions become possible. However, these assume cases in which the two modes present are utilized. If only one mode was utilized in the 31, 12-division ultrasonic motor of this embodiment, for example, only 6-division drive is possible in spite of the 31 mode. Further, when forming the progressive wave, reverse rotation is facilitated by reversing the phase shift or by reversing the shift of the mechanical phase. Also, the directions of polarization of the piezo-electric elements are the same in this embodiment, but by reversing the original polarization of the piezo-electric elements, it becomes unnecessary to reverse the signals in the waveform formation circuits A and B.

The structure of the vibrator in the ultrasonic motor of the fifth embodiment features twelve ribs 110. The boundaries of the electrode patterns which are divided into twelve parts correspond to the positions of the ribs 110, but the positions of the ribs 110 may correspond to the middle of the electrode patterns, and it is not necessary to provide twelve ribs for a 31 vibration mode, but rather there may be as few as one.

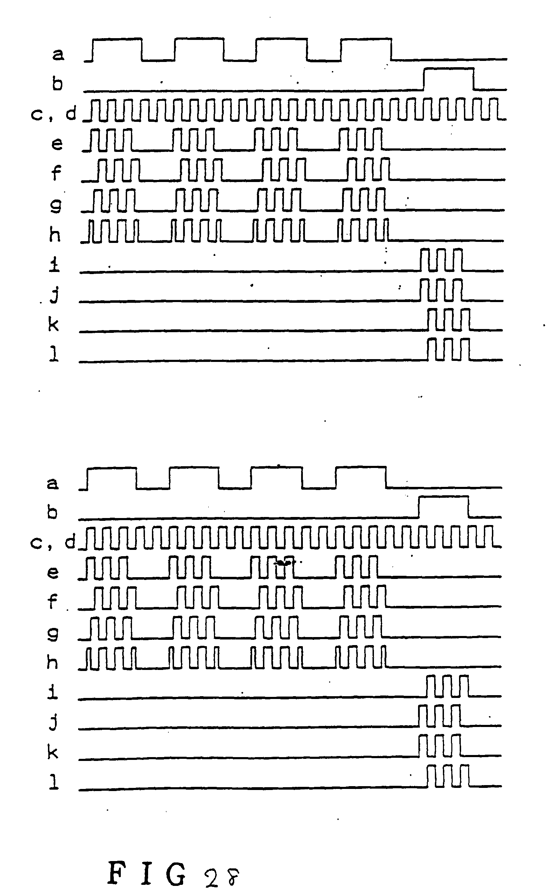

Figure 28 is a timing chart for a case in which an embodiment of the invention is driven by another method and it shows the conditions for signals a to 1. For example, when a 31, 12-division vibration mode is excited and a standing wave-progressive wave-standing wave-progressive wave action is repeated in this embodiment, 30-degree stepped drive is performed, but a progressive wave is excited and application of the signal is stopped by the control circuit A at a position which is advanced by approximately 6 degrees. Next, a progressive wave is excited again, and at a position which is advanced by approximately 6 degrees, application of the signal is stopped by the control circuit A, which drive is repeated. Stepped drive with a feed angle of 6 degrees is offered at this time, since excitation of only a progressive wave would result in accumulated error in the rotation of the rotor. Therefore, by exciting a standing wave once every four times a progressive wave is repeated, for example, control becomes possible every 30 degrees, thus achieving a readily controllable stepped drive with 60 divisions per rotation of the rotor.

In a different example, a method may be employed which drives continuously with progressive waves and excites standing waves only as required. For example, fast-forwarding or frame advance in a VCR can be simplified.

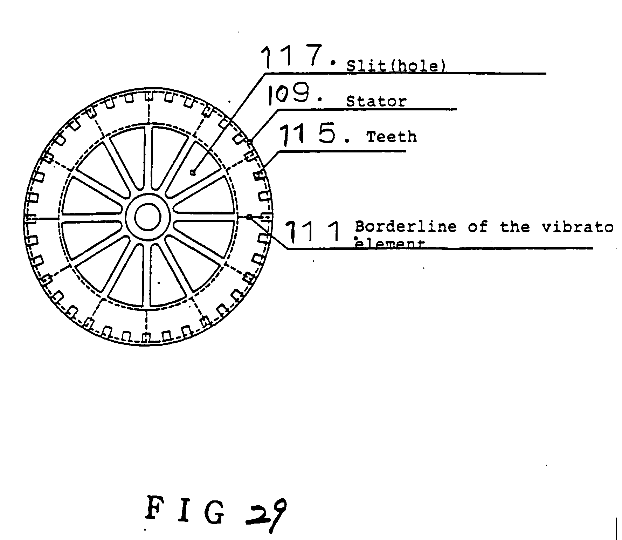

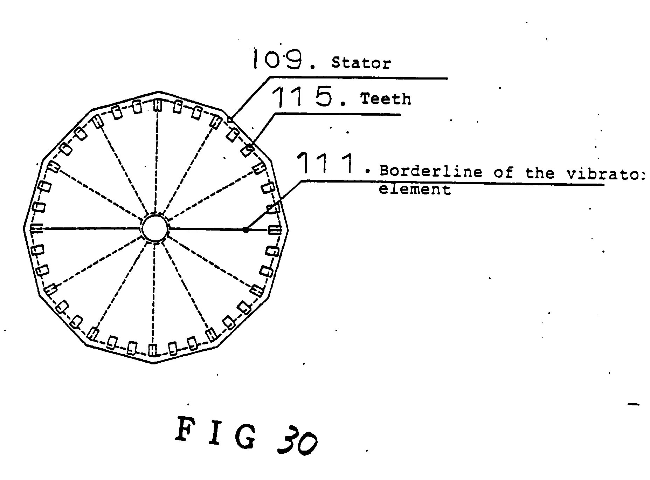

In the fifth embodiment, ribs were used in the structure to vary the rigidity or density at the boundaries between the vibrator sub-elements of the vibrator from that of the other parts, but slits or holes 117 can be used as shown in Figure 29, the shape of the circumference can be changed, e.g. a 12-sided shape for 31-mode vibration may be provided as shown in Figure 30, or other means can be used to vary the rigidity or mass at the boundaries or in the middle of the vibrator sub-elements from that of other parts with the objective of forming the vibration nodes at the boundaries of the sub-elements of the vibrator.

Excitation of the progressive waves is not limited to the method of the fifth embodiment as shown in Figure 26. For example, a progressive wave can be excited even if the standing wave excitation of Figure 25 or Figure 27 is performed by oscillating from the oscillation circuit a frequency intermediate between the resonance frequency of the vibrator sub-elements indicated by A and the resonance frequency of the vibrator sub-elements indicated by B in Figure 26. Further, the method of excitation of the standing waves is not limited to that of the fifth embodiment.

### Sixth Embodiment

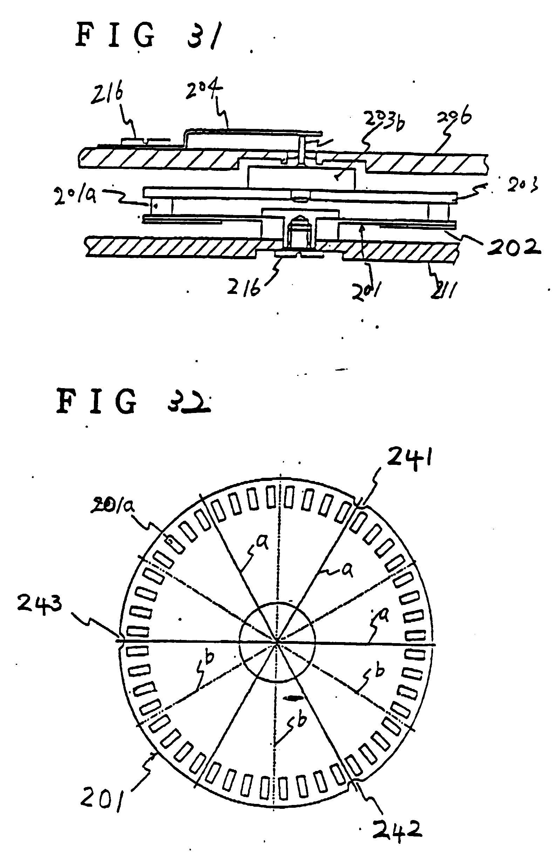

Figure 31 is a cross-section of a sixth embodiment of the ultrasonic motor of the invention, and Figure 32 is a top view of the stator of the sixth embodiment shown in Figure 31.

A piezo-electric ring 202 made from a piezo-electric material is attached to a stator 201. The stator 201 is fixed to a frame 211 by an anchor screw 216. A rotor 203 is in contact with teeth 201a on the stator 201 and is supported by a support plate 206 via a rotor shaft 203a on a pinion 203b for transmitting rotational force to the outside. Since the rotor shaft 203a is being pushed down by a spring 204 fixed by a screw 216 to the support plate 206, there is frictional contact between the rotor 203 and the teeth 201a.

In Figure 32, node positions a of a 31 flexural vibration mode are indicated by the solid lines, and node positions b which intersect at right angles thereto are indicated by the two-dot chain lines. Notches 241, 242, 243 are provided to adjust the resonance frequencies at the respective node positions a and b. In this case, the resonance frequency at the node positions b is low, so parts of the position of the vibration antinodes, i.e. node positions a, are removed to raise the resonance frequency and match it with the resonance frequency at node positions a. The resonance frequency of the vibration mode at the node positions a at this time is hardly affected since it is parts of the nodes that are removed. Of course, the amount removed and the location are not restricted since they are dependent on the amount of correction of the resonance frequency. Also, regarding the position of a notch, although a part corresponding to one node position is desirable, the configuration is not necessarily limited to this as long as the resonance frequencies of two node positions are equal. Laser machining, mechanical machining, etc., can be applied as the method of removal.

Since the two modes of the flexible vibration alter in the same way so as to produce a single mode when the resonance frequencies at two node positions intersecting at right angles are matched by means of the above method, the nodes can be freely formed in any direction with axial symmetry. In practice, it is difficult to completely degenerate the two modes in the same shape, but nearly the same effect can be achieved by lowering the Q value of the vibrator (stator). More specifically, methods can be employed to make the stator such as attaching vibration absorbent material and using material with a large vibration attenuation.

### Seventh Enmbodiment

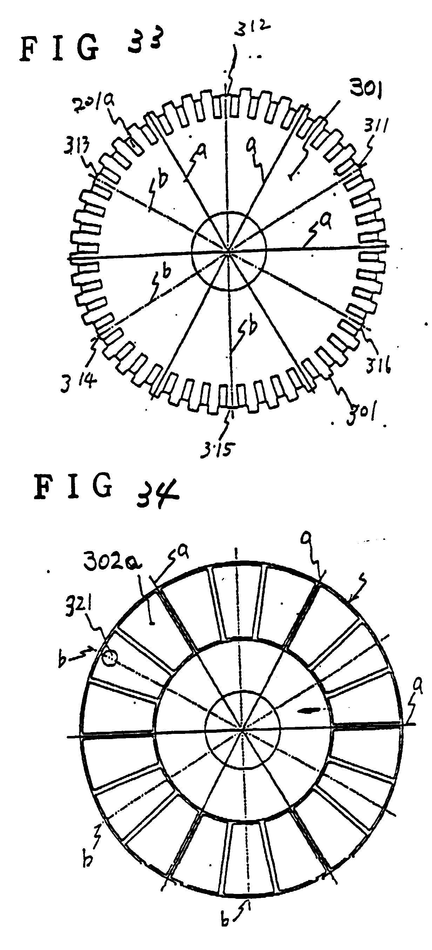

Figure 33 is a top view showing the stator shape in a seventh embodiment of the ultrasonic motor of the present invention. The seventh embodiment comprises a stator 301 having a plurality of projections 311 to 316 provided on its outer circumference. In this case, the projections 311 to 316 are disposed at the six locations corresponding to the node positions b in order to raise the resonance frequency at the node positions a. With this kind of shape, it is easy to remove the projections, and since the amount of change in the resonance frequency can be determined when one projection at one location is removed, adjustment is easy.

Figure 34 is a bottom view of an embodiment of a piezo-electric ring 302 which may be used in the seventh embodiment of an ultrasonic motor of the present invention. The piezo-electric ring 302 is divided up into a plurality of vibrator sub-elements and an electrode pattern 302a is formed on each. By impressing an AC voltage on each of the electrode patterns 302a, the vibrator sub-elements become distorted, thus inducing a standing wave vibration. A mass 321 is attached to an electrode pattern 302a and is formed of solder or adhesive. By attaching the mass 321 at a node position b, the resonance frequency at node positions a can be lowered. Since it is easy to attach or remove the mass 321 in such cases, there is no danger of maladjustment.

### Eighth Embodiment

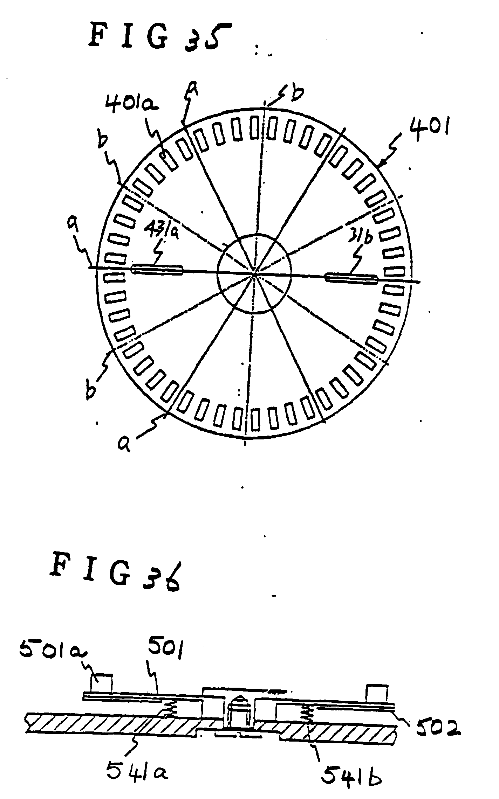

Figure 35 is a top view of a stator 401 which may be used in an eighth embodiment of an ultrasonic motor according to the present invention. The stator 401 has teeth 401a and slits or grooves 431a and 431b at node positions a. Since the rigidity of part of the mass of the stator 401 can be changed, the resonance frequencies at the node positions a and b can be changed. In this kind of embodiment, the effect on the respective node positions a and b can be changed by the shape thereof with a great degree of freedom.

### Ninth Embodiment.

Figure 36 is a side view of a stator 501 which may be used in a ninth embodiment of an ultrasonic motor according to the present invention. The ninth embodiment comprises a piezo-electric ring 502, teeth 501a and an elastic material 541a, 541b attached to the stator 502. The parts which are in contact can raise the resonance frequencies at node positions which become the antinodes of the vibration. In this embodiment, attachment and removal of the elastic material 541a, 541b are easy and adjustment can be readily performed.

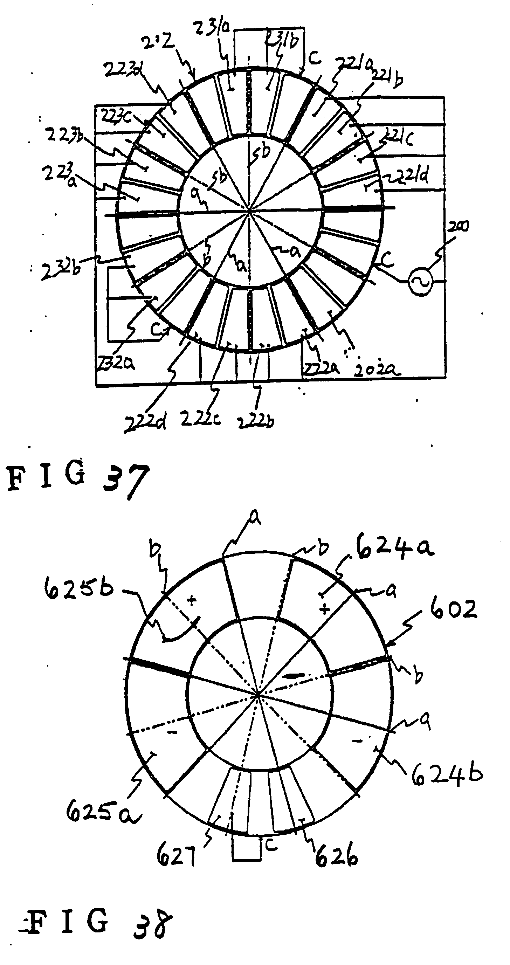

Figure 37 is an explanatory diagram showing a first example of a method by which voltages may be impressed on a piezo-electric ring 202 in an ultrasonic motor according to the present invention. The entire rear surface of the piezo-electric ring 202 is a common electrode. The piezo-electric ring 202 is divided up into a plurality, i.e. twenty four, of electrode patterns, of which every four of these patterns, for example, as shown in Figure 37 are combined in a single group. By impressing an AC voltage between every other group and a common electrode C, a 31 vibration mode can be induced. That is, electrode patterns 221a to 221d, 202a, 222a to 222d and 223a to 223d can be driven at the same time. At this time, the node positions are formed at a, and therefore the piezo-electric ring 202 becomes easy to deform. This is because the electrical field, which is generated by distortion when the areas around the node positions b, e.g., electrode patterns 231a, 231b, 232a and 232b, in the perpendicular direction are made conductive with the common electrode C, can move back and forth. The common electrode C is connected to a source 200 of alternating current. Therefore, the apparent rigidity around the node positions b falls and it becomes possible to lower the resonance frequency at node positions a. In this case, the type of vibration mode or the method of vibration is not restricted in any way. Also, since the charge of those parts whose relative rigidity is to be lowered can be discharged continuously, gradually or for only a certain period by some circuit means, there is no particular restriction on the method used. Raising the relative rigidity can also be easily achieved by intentionally impressing a voltage.

Figure 38 is an explanatory diagram of a second example of a method which may be used to impress voltage on the piezo-electric ring in an ultrasonic motor according to the present invention. A piezo-electric ring 602 has electrode patterns 624a, 624b, 625a and 625b, each having a 60 degree angle. The electrode patterns indicated by 624a and 625b are polarized in a positive direction, and the electrode patterns indicated by 624b and 625a are polarized in a negative direction. The electrode patterns 624a and 625b are separated by 30 degrees. The electrode patterns 624a and 624b are grouped together and the electrode patterns 625a and 625b are grouped together. A 31 progressive wave vibration is formed by impressing AC voltages with phases mutually shifted 90 degrees on the two groups. When only the 624a and 624b group is driven at this time, the node positions b are formed, and when only the 625a and 625b group is driven, only the node positions a are formed. However, as mentioned above, there are cases in which nodes cannot be formed at the desired positions and their respective resonance frequencies differ, thus inhibiting the formation of a stable progressive wave. Therefore, adjusting patterns 626 and 627 are provided, and the adjustment pattern 627, for example, is made conductive with the common electrode C on the rear side to reduce the apparent rigidity and lower the resonance frequency in the direction of the node positions a. By means of this adjustment, the node positions a and b can be altered in the same way and nodes can be formed in the desired directions to form a stable progressive wave. The mode of the progressive wave, the method of excitation, the shape and position of the electrode patterns and the method by which the charge is conducted are not restricted in any way.

By means of the embodiments described in detail above, vibration modes intersecting at right angles are altered in the same way by increasing or lowering the mass or rigidity and conducting the charge. Further, since the objective is to adjust the resonance frequency until degeneration is complete, the invention is not limited to the above embodiments, and the various means can be combined and implemented in any manner.

As described in the above embodiments, the ultrasonic motor is provided with non-contact areas on a rotatable member which correspond to the wavelengths in which the piezo-electric sub-element groups are formed, and there are a plurality of surface level differences on the surface of the vibrator with rotational symmetry in the prescribed wavelengths, so that the rotatable member rests at a prescribed position on the vibrator as a result of standing waves generated on the vibrator.

By these means, the following effects are achieved.
(1) the standing waves generated on the vibrator exert stress on the non-contact areas of the rotatable member, whereby the rotatable member stops at a prescribed relative position where the stress becomes balanced, and therefore stepping operation of the rotatable member becomes possible by moving the standing waves. For this reason, a position sensor or feedback circuit for detecting the rotational position of the rotatable member and controlling the amount of rotation as in the prior art becomes unnecessary, thus making it possible to make the ultrasonic motor more compact and reducing power consumption.
(2) When stepping operation accompanying movement of the standing waves is performed in a case in which a plurality of surface level differences with rotational symmetry in the prescribed period are provided on the vibrator, then the positions where the stress becomes balanced always occurs at the same intervals, thus facilitating precise stepping operation.
(3) When the first piezo-electric sub-element group and the second piezo-electric sub-element group are formed on the piezo-electric ring so that the positioning of the piezo-electric sub-elements and their direction of polarization are linearly symmetrical with each other, then the strength of vibration at the prescribed drive frequency and the resonance frequency can be made the same, whereby the drive efficiency can be improved.
(4) When 3-state drivers with a high output impedance condition are used in the drive means as the output switches which output the drive signals for each of the electrodes of the piezo-electric elements, then drive efficiency can be improved by cutting off the output switch that is not impressing a drive signal in each of the drive conditions to stop the outflow of power from the piezo-electric ring, and also the time to stabilization of the vibration of the piezo-electric can be shortened. Further, a fourth standing wave can be generated on the vibrator by setting the third output switch connected to the common electrode to a high output impedance condition and impressing an AC voltage between the first electrode and the second electrode.
(5) Stepping operation can be performed at the desired angle of rotation and power consumption can be reduced by using a drive method for the ultrasonic motor in which the rotatable member is driven by a progressive wave and is stopped by a standing wave, and a stop period is provided for the drive condition.
(6) Since the rotatable member can be driven using only standing waves by sequentially generating a plurality of standing waves with differing phases on the vibrator, the accuracy of the stepping angle can be improved in the stepping operation of the moving member.

## Claims

1. An ultrasonic motor comprising a vibrator (2) which is vibrated by a piezo-electric element ring (3) having a plurality of angularly spaced apart piezo-electric sub-elements (30a₁, 30a₂, 30a₃, 30b₁, 30b₂, 30b₃); a rotatable member (1) which is in contact with the vibrator (2) and which is arranged to be rotated by the latter; and drive means for impressing voltages on the subelements so as to produce vibration of the vibrator (2) which causes rotation of the rotatable member (1), characterised in that the rotatable member (1) has angularly spaced apart non-contact regions (1b) which are out of contact with the vibrator (2) and which are spaced from each other by half the wavelength of the said vibration.

2. An ultrasonic motor as claimed in claim 1 characterised in that the non-contact regions are constituted by notches or indentations (1b).

3. An ultrasonic motor as claimed in claim 1 or 2 characterised in that the sub-elements (30a₁, 30a₂, 30a₃, 30b₁, 30b₂, 30b₃) are alternately polarized in opposite directions.

4. An ultrasonic motor as claimed in any preceding claim characterised in that the piezo-electric subelements are arranged in first and second groups (30a₁, 30a₂, 30a₃; 30b₁, 30b₂, 30b₃) which are respectively connected to first and second electrodes (3a₁, 3a₂, 3a₃; 3b₁, 3b₂, 3b₃) or groups thereof.

5. An ultrasonic motor as claimed in claim 4 characterised in that the first and second electrodes or groups thereof (3a₁, 3a₂, 3a₃; 3b₁, 3b₂, 3b₃) are disposed on one side of the piezo-electric element ring (3), there being a common electrode disposed on the opposite side of the piezo-electric element ring (3), the drive means comprising first and second output means (D_{A}, D_{B}) for outputting drive signals to the first and second electrodes or groups thereof respectively and third output means (D_{C}) for outputting drive signals to the common electrode, each of the output means being settable to a high impedance output condition in addition to a drive signal output condition.

6. An ultrasonic motor as claimed in any preceding claim characterised in that the vibrator (2) has a plurality of contact regions (5) which contact the rotatable member (1) and are at a different level from the remainder of the vibrator (2), the contact regions (5) being symmetrically arranged angularly of the vibrator (2) and being spaced from each other by one part of 2n parts of the said wavelength of the vibration, where n is a whole number of at least 3.

7. An ultrasonic motor as claimed in claim 5 characterised in that the drive means intermittently rotates the rotatable member (1) by repeating a first drive condition in which AC voltages with a prescribed mutual phase difference are impressed between the first electrode (3A) and the common electrode (3C) and between the second electrode (3B) and the common electrode (3C) to induce a progressive wave on the piezo-electric element ring (3) and a second or third drive condition in which an AC voltage is impressed between the first electrode (3A) or the second electrode (3B) and the common electrode (3C) to induce a standing wave on the piezo-electric element ring (3).

8. An ultrasonic motor as claimed in claim 7 characterised in that the rotatable member (1) is intermittently driven by sequentially repeating a first drive condition, a second or third drive condition and a stop condition in which an AC voltage is not impressed between the first electrode (3A), or the second electrode (3B) and the common electrode (3C).

9. An ultrasonic motor as claimed in claim 5 characterised in that the drive means rotates the rotatable member (1) by repeating in any sequence a first drive condition in which an AC voltage is impressed between the first electrode (3A) and the common electrode (3C) to induce a first standing wave on the piezo-electric element ring (3), a second drive condition in which an AC voltage is impressed between the second electrode (3B) and the common electrode (3C) to induce a second standing wave on the piezo-electfic element ring (3), and a third drive condition in which an AC voltage is impressed between the first electrode (3A) and the common electrode (3C) and between the second electrode (3B) and the common electrode (3C) to induce a third standing wave on the piezo-electric element ring (3).

10. An ultrasonic motor as claimed in claim 5 characterised in that the drive means repeats in any sequence a first drive condition in which an AC voltage is impressed between the first electrode (3A) and the common electrode (3C) to induce a first standing wave on the piezo-electric element ring (3), a second drive condition in which an AC voltage is impressed between the second electrode (3B) and the common electrode (3C) to induce a second standing wave on the piezo-electric element ring (3), a third drive condition in which an AC voltage is impressed between the first electrode (3A) and the common electrode (3C) and between the second electrode (3B) and the common electrode (3C) to induce a third standing wave on the piezo-electric element ring (3), and a fourth drive condition in which an AC voltage is impressed between the first electrode (3A) and the second electrode (3B) with an output switch connected to the common electrode (3C) in a cut-off condition to induce a fourth standing wave on the piezo-electric element ring (3).

11. An ultrasonic motor as claimed in claim 5 characterised in that the drive means rotates the rotatable member (1) by repeating in any sequence a first drive condition in which an AC voltage is impressed between the first electrode (3A) and the common electrode (3C) to induce a first standing wave on the piezo-electric element ring (3), a second drive condition in which an AC voltage is impressed between the second electrode (3B) and the common electrode (3C) to induce a second standing wave on the piezo-electric element ring (3), and a third drive condition in which an AC voltage is impressed between the first electrode (3A) and the second electrode (3B) with the common electrode (3C) in a cut-off condition to induce a third standing wave on the piezo-electric element ring (3).

12. An ultrasonic motor comprising:
piezo-electric element (13) on one side of a vibrator (2) which is vibrated by the piezo-electric element (3); moving member (1) which is in contact with the vibrator (2) and is rotated by frictional force; a piezo-electric ring (3) having a circumference which corresponds to a prescribed wavelength provided on the piezo-electric element and on which piezo-electfic sub-elements (30a₁, 30a₂, 30a₃, 30b₁, 30b₂, 30b₃) polarized in the opposite direction from top to bottom are alternately positioned; first piezo-electric sub-element row (30a₁, 30a₂, 30a₃) and second row piezo-electric sub-element row (30b₁, 30b₂, 30b₃) formed along the annular ring of the piezo-electric ring (3) with a mutual spatial phase difference; and drive means capable of impressing AC voltages on the first piezo-electfic sub-element row (30a₁, 30a₂, 30a₃) and the second piezo-electric sub-element row (30b₁, 30b₂, 30b₃); wherein non-contact areas made up of notches or indentations (1b) and corresponding to the vibrator (2) are formed on the moving member (1) on the surface toward the vibrator (2) in the direction of rotation and in intervals that correspond to half the above prescribed wavelength.

13. The ultrasonic motor as claimed in claim 12, wherein the first piezo-electric sub-element row (30a₁, 30a₂, 30a₃) and the second piezo-electric subelement row (30b₁, 30b₂, 30b₃) are positioned along the piezo-electric ring (3) with a spatial phase difference that is one-fourth the prescribed wavelength.

14. The ultrasonic motor as claimed in claim 12 wherein the first piezo-electric sub-element row (30a₁, 30a₂, 30a₃) and the second piezo-electric subelement row (30b₁, 30b₂, 30b₃) are positioned along the piezo-electric ring with a spatial phase difference that is one-sixth the prescribed wavelength.

15. The ultrasonic motor as claimed in claim 12 wherein the positioning of the piezo-electric sub-elements (30a₁, 30a₂, 30a₃, 30b₁, 30b₂, 30b₃) and the direction of polarization of the piezo-electric subelements of the first piezo-electric subelement row (30a₁, 30a₂, 30a₃) and the second piezoelectric subelement row (30b₁, 30b₂, 30b₃) are linearly symmetrical to each other on the surface of the piezo-electric ring (3).

16. A method for driving an ultrasonic motor of any preceding claim, wherein a drive means of the ultrasonic motor intermittently rotates a moving member (1) by repeating a first drive condition in which AC voltages with a prescribed mutual phase difference are impressed between a first electrode (3A) and a common electrode (3C) and between a second electrode (3B) and a common electrode (3C) to induce a progressive wave on a piezo-electric ring and a second or third drive condition in which an AC voltage is impressed between the first electrode (3A) or the second electrode (3B) and the common electrode (3C) or the second electrode (3B) and the common electrode (3C) to induce a standing wave on the piezo-electric ring.

17. A method of driving an ultrasonic motor of any of claims 1 to 15, wherein the moving member (1) is moved in contact with projections (5) provided on the vibrator (2), to which a vibrator element made up of a plurality of vibrator sub-elements is attached, by vibrating the vibrator (2), wherein the excitation of a progressive wave, the excitation of a standing wave and stoppage of excitation on the vibrator are switched in time series.

18. A method for driving an ultrasonic motor of any of claims 1 to 15, wherein the stator (2) is provided with a frequency near the resonance point, and is vibrated by the vibrator element (3) at the same time or in a time series through a plurality of vibration conditions, thereby causing the rigidity and mass of the vibrating parts of the stator (2) to be partially increased or decreased.

## Patentansprüche

1. Ultraschallmotor, umfassend einen Vibrator (2), welcher durch ein piezoelektrisches Ringelement (3) in Schwingung versetzt wird, das eine Mehrzahl von in Winkelabstand zueinander angeordneten piezoelektrischen Unterelementen (30a₁, 30a₂, 30a₃, 30b₁, 30b₂, 30b₃) aufweist, ein drehbares Element (1), welches in Kontakt mit dem Vibrator (2) ist und welches dazu eingerichtet ist, daß es durch letzteren gedreht wird, und ein Antriebsmittel zum Anlegen von Spannungen an die Unterelemente, um eine Schwingung des Vibrators (2) zu erzeugen, welche eine Drehung des drehbaren Elements (1) verursacht,
dadurch gekennzeichnet, daß das drehbare Element (1) im Winkelabstand zueinander angeordnete Nicht-Kontaktbereiche (1b) aufweist, welche nicht in Kontakt mit dem Vibrator (2) stehen und welche zueinander einen Abstand von der Hälfte der Wellenlänge der Schwingung aufweisen.

2. Ultraschallmotor nach Anspruch 1, dadurch gekennzeichnet, daß die Nicht-Kontaktbereiche durch Nuten oder Einkerbungen (1b) gebildet sind.

3. Ultraschallmotor nach Anspruch 1 oder 2, dadurch gekennzeichnet, daß die Unterelemente (30a₁, 30a₂, 30a₃, 30b₁, 30b₂, 30b₃) alternierend in entgegengesetzte Richtungen polarisiert sind.

4. Ultraschallmotor nach einem der vorhergehenden Ansprüche, dadurch gekennzeichnet, daß die piezoelektrischen Unterelemente in ersten und zweiten Gruppen (30a₁, 30a₂, 30a₃; 30b₁, 30b₂, 30b₃) angeordnet sind, welche jeweils mit ersten und zweiten Elektroden (3a₁, 3a₂, 3a₃; 3b₁, 3b₂, 3b₃) oder Gruppen derselben verbunden sind.

5. Ultraschallmotor nach Anspruch 4, dadurch gekennzeichnet, daß die ersten und zweiten Elektroden oder Gruppen derselben (3a₁, 3a₂; 3a₃, 3b₁, 3b₂, 3b₃) an einer Seite des piezoelektrischen Ringelements (3) angeordnet sind, wobei eine gemeinsame Elektrode vorgesehen ist, die an der entgegengesetzten Seite des piezoelektrischen Ringelements (3) angeordnet ist, wobei das Antriebsmittel erste und zweite Ausgabemittel (D_{A}, D_{B}) umfaßt zum Ausgeben von Antriebssignalen zu den ersten bzw. zweiten Elektroden oder Gruppen derselben sowie dritte Ausgabemittel (D_{C}) zum Ausgeben von Antriebssignalen zu der gemeinsamen Elektrode, wobei jedes der Ausgabemittel zusätzlich zu einem Antriebssignal-Ausgabezustand auf einen Ausgabezustand mit hoher Impedanz einstellbar ist.

6. Ultraschallmotor nach einem der vorhergehenden Ansprüche, dadurch gekennzeichnet, daß der Vibrator (2) eine Mehrzahl von Kontaktbereichen (5) aufweist, welche das drehbare Element (1) berühren und bei einem anderen Nieveau bezüglich des Rests des Vibrators (2) sind, wobei die Kontaktbereiche (5) bezüglich des Vibrators (2) winkelmäßig symmetrisch angeordnet sind und voneinander einen Abstand von einem Teil von 2n Teilen der Wellenlänge der Schwingung aufweisen, wobei n eine ganze Zahl größer oder gleich 3 ist.

7. Ultraschallmotor nach Anspruch 5, dadurch gekennzeichnet, daß das Antriebsmittel das drehbare Element (1) intermittierend dreht, indem ein erster Antriebszustand, in welchem Wechselspannungen mit einer vorgeschriebenen gegenseitigen Phasendifferenz zwischen der ersten Elektrode (3A) und der gemeinsamen Elektrode (3C) und zwischen der zweiten Elektrode (3B) und der gemeinsamen Elektrode (3C) angelegt werden, um an dem piezoelektrischen Ringelement (3) eine Wanderwelle zu induzieren, und ein zweiter oder dritter Antriebszustand wiederholt werden, in welchem eine Wechselspannung zwischen der ersten Elektrode (3A) oder der zweiten Elektrode (3B) und der gemeinsamen Elektrode (3C) angelegt wird, um eine stehende Welle an dem piezoelektrischen Ringelement (3) zu induzieren.

8. Ultraschallmotor nach Anspruch 7, dadurch gekennzeichnet, daß das drehbare Element intermittierend angetrieben wird, indem ein erster Antriebszustand, ein zweiter oder dritter Antriebszustand und ein Stoppzustand sequentiell wiederholt werden, in welchem keine Wechselspannung zwischen der ersten Elektrode (3A) oder der zweiten Elektrode (3B) und der gemeinsamen Elektrode (3C) angelegt wird.

9. Ultraschallmotor nach Anspruch 5, dadurch gekennzeichnet, daß das Antriebsmittel das drehbare Element (1) durch Wiederholen eines ersten Antriebszustands, in welchem eine Wechselspannung zwischen der ersten Elektrode (3A) und der gemeinsamen Elektrode (3C) angelegt wird, um eine erste stehende Welle an dem piezoelektrischen Ringelement (3) zu induzieren, eines zweiten Antriebszustands, in welchem eine Wechselspannung zwischen der zweiten Elektrode (3B) und der gemeinsamen Elektrode (3C) angelegt wird, um eine zweite stehende Welle an dem piezoelektrischen Ringelement (3) zu induzieren, und eines dritten Antriebszustands.in irgendeiner Abfolge dreht, in welchem eine Wechselspannung zwischen der ersten Elektrode (3A) und der gemeinsamen Elektrode (3C) und zwischen der zweiten Elektrode (3B) und der gemeinsamen Elektrode (3C) angelegt wird, um eine dritte stehende Welle an dem piezoelektrischen Ringelement (3) zu induzieren.

10. Ultraschallmotor nach Anspruch 5, dadurch gekennzeichnet, daß das Antriebsmittel in irgendeiner Abfolge einen ersten Antriebszustand, in welchem eine Wechselspannung zwischen der ersten Elektrode (3A) und der gemeinsamen Elektrode (3C) angelegt wird, um eine erste stehende Welle an dem piezoelektrischen Ringelement (3) zu induzieren, einen zweiten Antriebszustand, in welchem eine Wechselspannung zwischen der zweiten Elektrode (3B) und der gemeinsamen Elektrode (3C) angelegt wird, um eine zweite stehende Welle an dem piezoelektrischen Ringelement (3) zu induzieren, einen dritten Antriebszustand, in welchem eine Wechselspannung zwischen der ersten Elektrode (3A) und der gemeinsamen Elektrode (3C) und zwischen der zweiten Elektrode (3B) und der gemeinsamen Elektrode (3C) angelegt wird, um eine dritte stehende Welle an dem piezoelektrischen Ringelement (3) zu induzieren, und einen vierten Antriebszustand wiederholt, in welchem eine Wechselspannung zwischen der ersten Elektrode (3A) und der zweiten Elektrode (3B) angelegt wird, wobei ein mit der gemeinsamen Elektrode (3C) verbundener Ausgabeschalter in einem unterbrochenen Zustand ist, um eine vierte stehende Welle an dem piezoelektrischen Ringelement (3) zu induzieren.

11. Ultraschallmotor nach Anspruch 5, dadurch gekennzeichnet, daß das Antriebsmittel das drehbare Element (1) durch Wiederholen eines ersten Antriebszustands, in welchem eine Wechselspannung zwischen der ersten Elektrode (3A) und der gemeinsamen Elektrode (3C) angelegt wird, um eine erste stehende Welle an dem piezoelektrischen Ringelement (3) zu induzieren, eines zweiten Antriebszustands, in welchem eine Wechselspannung zwischen der zweiten Elektrode (3B) und der gemeinsamen Elektrode (3C) angelegt wird, um eine zweite stehende Welle an dem piezoelektrischen Ringelement zu induzieren, und eines dritten Antriebszustands in irgendeiner Abfolge dreht, in welchem eine Wechselspannung zwischen der ersten Elektrode (3A) und der zweiten Elektrode (3B) angelegt wird, wobei die gemeinsame Elektrode (3C) in einem abgeschalteten Zustand ist, um eine dritte stehende Welle an dem piezoelektrischen Ringelement zu induzieren.

12. Ultraschallmotor, umfassend: ein piezoelektrisches Element (13) an einer Seite eines Vibrators (2), welcher durch das piezoelektrische Element (3) zur Schwingung angeregt wird, ein Bewegungselement (1), welches in Kontakt mit dem Vibrator (2) ist und durch Reibungskraft gedreht wird, einen piezoelektrischen Ring (3) mit einem Umfang, welcher einer an dem piezoelektrischen Element vorgesehenen vorgeschriebenen Wellenlänge entspricht, und an welchem Ring piezoelektrische Unterelemente (30a₁, 30a₂, 30a₃, 30b₁, 30b₂, 30b₃), die von oben nach unten in entgegengesetzter Richtung polarisiert sind, alternierend angeordnet sind, eine erste Reihe piezoelektrischer Unterelemente (30a₁, 30a₂, 30a₃) und eine zweite Reihe piezoelektrischer Unterelemente (30b₁, 30b₂, 30b₃), welche entlang des ringförmigen Rings des piezoelektrischen Rings (3) mit einer gegenseitigen räumlichen Phasendifferenz ausgebildet sind, und ein Antriebsmittel, welches Wechselspannungen an die erste Reihe piezoelektrischer Unterelemente (30a₁, 30a₂, 30a₃) und die zweite Reihe piezoelektrischer Unterelemente (30b₁, 30b₂, 30b₃) anlegen kann, worin Nicht-Kontaktbereiche, welche aus Nuten oder Einkerbungen (1b) gebildet sind und dem Vibrator (2) entsprechen, an dem Bewegungselement (1) an der dem Vibrator (2) zugewandten Oberfläche in der Drehrichtung und in Intervallen ausgebildet sind, welche der Hälfte der oben angegebenen vorgeschriebenen Wellenlänge entsprechen.

13. Ultraschallmotor nach Anspruch 12, worin die erste Reihe piezoelektrischer Unterelemente (30a₁, 30a₂, 30a₃) und die zweite Reihe piezoelektrischer Unterelemente (30b₁, 30b₂, 30b₃) entlang des piezoelektrischen Rings (3) mit einer räumlichen Phasendifferenz positioniert sind, welche ein Viertel der vorgeschriebenen Wellenlänge ist.

14. Ultraschallmotor nach Anspruch 12, worin die erste Reihe piezoelektrischer Unterelemente (30a₁, 30a₂, 30a₃) und die zweite Reihe piezoelektrischer Unterelemente (30b₁, 30b₂, 30b₃) entlang des piezoelektrischen Rings mit einer räumlichen Phasendifferenz positioniert sind, welche ein Sechstel der vorgeschriebenen Wellenlänge ist.

15. Ultraschallmotor nach Anspruch 12, worin die Positionierung der piezoelektrischen Unterelemente (30a₁, 30a₂, 30a₃, 30b₁, 30b₂, 30b₃) und die Richtung der Polarisation der piezoelektrischen Unterelemente der ersten Reihe piezoelektrischer Unterelemente (30a₁, 30a₂, 30a₃) und der zweiten Reihe piezoelektrischer Unterelemente (30b₁, 30b₂, 30b₃) an der Oberfläche des piezoelektrischen Rings (3) zueinander linear symmetrisch sind.

16. Verfahren zum Antreiben eines Ultraschallmotors nach einem der vorhergehenden Ansprüche, worin ein Antriebsmittel des Ultraschallmotors ein Bewegungselement (1) intermittierend dreht durch Wiederholen eines ersten Antriebszustands, in welchem Wechselspannungen mit einer vorgeschriebenen gegenseitigen Phasendifferenz zwischen einer ersten Elektrode (3A) und einer gemeinsamen Elektrode (3C) und zwischen einer zweiten Elektrode (3B) und einer gemeinsamen Elektrode (3C) angelegt werden, um eine Wanderwelle an dem piezoelektrischen Ring zu erzeugen, und eines zweiten oder dritten Antriebszustands, in welchen eine Wechselspannung zwischen der ersten Elektrode (3A) oder der zweiten Elektrode (3B) und der gemeinsamen Elektrode (3C) oder der zweiten Elektrode (3B) und der gemeinsamen Elektrode (3C) angelegt wird, um eine stehende Welle an dem piezoelektrischen Ring zu induzieren.

17. Verfahren zum Antreiben eines Ultraschallmotors nach einem der Ansprüche 1 bis 15, worin das Bewegungselement (1) in Kontakt mit Vorsprüngen (5) bewegt wird, welche an dem Vibrator (2) vorgesehen sind, an welchem ein Vibratorelement, das aus einer Mehrzahl von Vibratorunterelementen gebildet ist, angebracht ist, indem der Vibrator (2) in Schwingung versetzt wird, worin die Anregung einer Wanderwelle, die Anregung einer stehenden Welle und das Stoppen der Anregung an dem Vibrator in Zeitabfolge umgeschaltet werden.

18. Verfahren zum Antreiben eines Ultraschallmotors nach einem der Ansprüche 1 bis 15, worin der Stator (2) mit einer Frequenz nahe dem Resonanzpunkt vorgesehen ist und durch das Vibratorelement (3) gleichzeitig oder in einer zeitlichen Abfolge durch eine Mehrzahl von Schwingungszuständen in Schwingung versetzt wird, wodurch verursacht wird, daß die Steifigkeit und die Masse der schwingenden Teile des Stators (2) teilweise erhöht oder verringert werden.

## Revendications

1. Moteur à ultrasons comprenant un vibreur (2) qui est entraîné en vibration par un élément piézo-électrique annulaire (3) comprenant une pluralité de composants piézo-électriques espacés d'un certain angle (30a₁, 30a₂, 30a₃, 30b₁, 30b₂, 30b₃) ; un élément rotatif (1) qui est en contact avec le vibreur (2) et agencé pour être entraîné en rotation par ce dernier ; et des moyens d'entraînement pour appliquer des tensions aux composants afin de produire des vibrations du vibreur (2), lesquelles entraînent la rotation de l'élément rotatif (1), caractérisé en ce que l'élément rotatif (1) comprend des régions (1b) de non-contact espacées d'un certain angle, qui ne sont pas en contact avec le vibreur (2) et qui sont espacées l'une de l'autre d'une demi-longueur d'onde de ladite vibration.

2. Moteur à ultrasons selon la revendication 1, caractérisé en ce que les régions de non-contact sont constituées par des encoches ou des découpes (1b).

3. Moteur à ultrasons selon l'une des revendications 1 ou 2, caractérisé en ce que les composants (30a₁, 30a₂, 30a₃, 30b₁, 30b₂, 30b₃) sont polarisés alternativement dans des sens opposés.

4. Moteur à ultrasons selon l'une quelconque des revendications précédentes, caractérisé en ce que les composants piézo-électriques sont agencés en un premier et un second groupes (30a₁, 30a₂, 30a₃ ; 30b₁, 30₂, 30b₃) qui sont respectivement reliés à une première et à une seconde électrodes (3a₁, 3a₂, 3a₃ ; 3b₁, 3b₂, 3b₃) ou à des groupes d'électrodes.

5. Moteur à ultrasons selon la revendication 4, caractérisé en ce que la première et la seconde électrodes ou les groupes d'électrodes (3a₁, 3a₂, 3a₃ ; 3b₁, 3b₂, 3b₃) sont disposés d'un côté de l'élément piézo-électrique annulaire (3), une électrode commune étant placée sur la face opposée de l'élément piézo-électrique annulaire (3), les moyens d'entraînement comprenant un premier et un second moyens de sortie (D_{A}, D_{B}) pour délivrer des signaux d'entraînement à la première et à la seconde électrodes ou au groupe d'électrodes respectivement, et un troisième moyen de sortie (D_{C}) pour délivrer les signaux d'entraînement à l'électrode commune, chacun des moyens de sortie pouvant être réglé à un état de sortie d'une impédance élevée en plus de l'état de sortie d'un signal d'entraînement.

6. Moteur à ultrasons selon l'une quelconque des revendications précédentes, caractérisé en ce que le vibreur (2) comprend une pluralité de régions de contact (5) qui sont en contact avec l'élément rotatif (1) et sont à un niveau différent du reste du vibreur (2), les régions de contact (5) étant disposées symétriquement avec un certain angle par rapport au vibreur (2), et étant espacées l'une de l'autre d'une des 2n parties de ladite longueur d'onde de vibration, n étant un nombre entier au moins égal à 3.

7. Moteur à ultrasons selon la revendication 5, caractérisé en ce que les moyens d'entraînement font tourner l'élément rotatif (1) par intermittence en reproduisant une première condition d'entraînement dans laquelle des tensions alternatives ayant entre elles une différence de phase prévue sont appliquées entre la première électrode (3A) et l'électrode commune (3C), et entre la seconde électrode (3B) et l'électrode commune (3C) pour induire une onde progressive sur l'élément piézo-électrique annulaire (3) et une seconde ou une troisième condition d'entraînement dans laquelle une tension alternative est appliquée entre la première électrode (3A) ou la seconde électrode (3B) et l'électrode commune (3C) pour induire une onde stationnaire sur l'élément piézo-électrique annulaire (3).

8. Moteur à ultrasons selon la revendication 7, caractérisé en ce que l'élément rotatif (1) est entraîné par intermittence en répétant successivement une première condition d'entraînement, une seconde ou une troisième condition d'entraînement et une condition d'arrêt dans laquelle une tension alternative n'est pas appliquée entre la première électrode (3A), ou la seconde électrode (3B) et l'électrode commune (3C).

9. Moteur à ultrasons selon la revendication 5, caractérisé en ce que les moyens d'entraînement font tourner l'élément rotatif (1) en reproduisant dans n'importe quel ordre une première condition d'entraînement dans laquelle une tension alternative est appliquée entre la première électrode (3A) et l'électrode commune (3C) pour induire une première onde stationnaire sur l'élément piézo-électrique annulaire (3), une seconde condition d'entraînement dans laquelle une tension alternative est appliquée entre la seconde électrode (3B) et l'électrode commune (3C) pour induire une seconde onde stationnaire sur l'élément piézo-électrique annulaire (3), et une troisième condition d'entraînement dans laquelle une tension alternative est appliquée entre la première électrode (3A) et l'électrode commune (3C) et entre la seconde électrode (3B ) et l'électrode commune (3C) pour induire une troisième onde stationnaire sur l'élément piézo-électrique annulaire (3).

10. Moteur à ultrasons selon la revendication 5, caractérisé en ce que les moyens d'entraînement reproduisent dans n'importe quel ordre une première condition d'entraînement dans laquelle une tension alternative est appliquée entre la première électrode (3A) et l'électrode commune (3C) pour induire une première onde stationnaire sur l'élément piézo-électrique annulaire (3), une seconde condition d'entraînement dans laquelle une tension alternative est appliquée entre la seconde électrode (3B) et l'électrode commune (3C) pour induire une seconde onde stationnaire sur l'élément piézo-électrique annulaire (3), une troisième condition d'entraînement dans laquelle une tension alternative est appliquée entre la première électrode (3A) et l'électrode commune (3C) et entre la seconde électrode (3B) et l'électrode commune (3C) pour induire une troisième onde stationnaire sur l'élément piézo-électrique annulaire (3), et une quatrième condition d'entraînement dans laquelle une tension alternative est appliquée entre la première électrode (3A) et la seconde électrode (3B) avec un commutateur de sortie connecté à l'électrode commune (3C) à l'état de coupure pour induire une quatrième onde stationnaire sur l'élément piézo-électrique annulaire (3).

11. Moteur à ultrasons selon la revendication 5, caractérisé en ce que les moyens d'entraînement font tourner l'élément rotatif (1) en reproduisant dans n'importe quel ordre une première condition d'entraînement dans laquelle une tension alternative est appliquée entre la première électrode (3A) et l'électrode commune (3C) pour induire une première onde stationnaire sur l'élément piézo-électrique annulaire (3), une seconde condition d'entraînement dans laquelle une tension alternative est appliquée entre la seconde électrode (3B) et l'électrode commune (3C) pour induire une seconde onde stationnaire sur l'élément piézo-électrique annulaire (3), et une troisième condition d'entraînement dans laquelle une tension alternative est appliquée entre la première électrode (3A) et la seconde électrode (3B), alors que l'électrode commune (3C) se trouve dans un état de coupure pour induire une troisième onde stationnaire sur l'élément piézo-électrique annulaire (3).

12. Moteur à ultrasons comprenant :
un élément piézo-électrique (13) sur une face d'un vibreur (2), lequel est entraîné en vibration par l'élément piézo-électrique (3) ; un élément mobile (1) qui est en contact avec le vibreur (2) et entraîné en rotation par une force de friction ; un élément piézo-électrique annulaire (3) ayant une circonférence qui correspond à une longueur d'onde prévue, fournie à l'élément piézo-électrique et sur lequel des composants piézo-électriques (30a₁, 30a₂, 30a₃, 30b₁, 30b₂, 30b₃) polarisés dans des sens opposés de haut en bas, sont placés alternativement ; une première rangée de composants piézo-électriques (30a₁, 30a₂, 30a₃) et une seconde rangée de composants piézo-électriques (30b₁, 30b₂, 30b₃) formées le long du contour annulaire de l'élément piézo-électrique annulaire (3) avec un déphasage mutuel dans l'espace ; et des moyens d'entraînement aptes à appliquer des tensions alternatives sur la première rangée de composants piézo-électriques (30a₁, 30a₂, 30a₃) et la seconde rangée de composants piézo-électriques (30b₁, 30b₂, 30b₃) ; dans lequel des zones de non-contact constituées par des encoches ou des découpes (1b) et correspondant au vibreur (2) sont formées sur la surface de l'élément mobile (1) orientée vers le vibreur(2) dans la direction de rotation et avec des intervalles qui correspondent à la moitié de la longueur d'onde prévue citée ci-dessus.

13. Moteur à ultrasons selon la revendication 12, dans lequel la première rangée de composants piézo-électriques (30a₁, 30a₂, 30a₃) et la seconde rangée de composants piézo-électriques (30b₁, 30b₂, 30b₃) sont placées le long de l'élément piézo-électrique annulaire (3) avec un déphasage dans l'espace égal au quart de la longueur d'onde prévue.

14. Moteur à ultrasons selon la revendication 12, dans lequel la première rangée de composants piézo-électriques (30a₁, 30a₂, 30a₃) et la seconde rangée de composants piézo-électriques (30b₁, 30b₂, 30b₃) sont placées le long de l'élément piézo-électrique annulaire avec un déphasage dans l'espace égal au sixième de la longueur d'onde prévue.

15. Moteur à ultrasons selon la revendication 12, dans lequel la position des composants piézo-électriques (30a₁, 30a₂, 30a₃, 30b₁, 30b₂, 30b₃) et le sens de polarisation des composants piézo-électriques de la première rangée de composants piézo-électriques (30a₁, 30a₂, 30a₃) et de la seconde rangée de composants piézo-électriques (30b₁, 30b₂, 30b₃) sont linéairement symétriques les uns des autres sur la surface de l'élément piézo-électrique annulaire (3).

16. Procédé d'entraînement d'un moteur à ultrasons selon l'une quelconque des revendications précédentes, dans lequel des moyens d'entraînement du moteur à ultrasons entraînent en rotation par intermittence un élément mobile (1) en reproduisant une première condition d'entraînement dans laquelle des tensions alternatives ayant un déphasage mutuel prévu sont appliquées entre une première électrode (3A) et une électrode commune (3C), et entre une seconde électrode (3B) et une électrode commune (3C) pour induire une onde progressive sur un élément piézo-électrique annulaire, et une seconde ou une troisième condition d'entraînement dans laquelle une tension alternative est appliquée entre la première électrode (3A) ou la seconde électrode (3B) et l'électrode commune (3C) ou la seconde électrode (3B) et l'électrode commune (3C) pour induire une onde stationnaire sur l'élément piézo-électrique annulaire.

17. Procédé d'entraînement d'un moteur à ultrasons selon l'une quelconque des revendications 1 à 15, dans lequel l'élément mobile (1) est déplacé en contact avec des protubérances (5) formées sur le vibreur (2), sur lequel un élément vibrant constitué par une pluralité de composants de vibreur est fixé, faisant vibrer le vibreur (2), dans lequel l'excitation d'une onde progressive, l'excitation d'une onde stationnaire et l'arrêt de l'excitation du vibreur sont commutés en série dans le temps.

18. Procédé d'entraînement d'un moteur à ultrasons selon l'une quelconque des revendications 1 à 15, dans lequel le stator (2) a une fréquence proche du point de résonance, et se trouve entraîné en vibration par le vibreur (3) en même temps ou successivement dans une pluralité de conditions de vibration, en faisant ainsi augmenter ou diminuer partiellement la rigidité et la masse des parties vibrantes du stator (2).
